(19) Europäisches Patentamt
European Patent Office
Office européen des brevets

(11) **EP 2 975 484 A1**

(12) **EUROPEAN PATENT APPLICATION**
published in accordance with Art. 153(4) EPC

(43) Date of publication:
**20.01.2016 Bulletin 2016/03**

(21) Application number: **13878098.6**

(22) Date of filing: **09.12.2013**

(51) Int Cl.:
**G05D 3/12** *(2006.01)*      **G01C 19/00** *(2013.01)*

(86) International application number:
**PCT/JP2013/007222**

(87) International publication number:
**WO 2014/141341 (18.09.2014 Gazette 2014/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.03.2013 JP 2013050330**

(71) Applicant: **NEC Corporation
Tokyo 108-8001 (JP)**

(72) Inventor: **SHIMIZU, Motoaki
Tokyo 108-8001 (JP)**

(74) Representative: **Vossius & Partner
Patentanwälte Rechtsanwälte mbB
Siebertstrasse 3
81675 München (DE)**

(54) **SPATIAL STABILIZATION DEVICE, SPATIAL STABILIZATION CONTROL METHOD AND SPATIAL STABILIZATION CONTROL PROGRAM**

(57)      A spatial stabilization apparatus capable of performing spatial stabilization while performing target tracking is provided. The spatial stabilization apparatus (700) includes a controlled object (1), angle detection means (2) for detecting the angle of the controlled object (1) and outputting the detected angle as a detection angle signal ($\theta$m); and first command generation means (5) for outputting a target angle command ($\theta$t) and a target angular speed command ($\omega$t1) for the controlled object (1). The spatial stabilization apparatus (700) further includes an inertia sensor (8) that detects the angular speed of the controlled object (1) and outputs the detected angular speed as a detection angular speed signal ($\omega$m), first subtraction means (11) for obtaining a difference between the target angular speed command ($\omega$t1) and the angular speed and outputting the difference as a differential angular speed signal (K$\omega$c), and first control means (9) for generating a drive control signal (K$\theta$c) based on the differential angular speed signal (K$\omega$c) and a difference between the target angle command ($\theta$t) and the angle. The spatial stabilization apparatus (700) controls a rotation of the controlled object (1) so that an effect on the controlled object (1) caused by a movement of the vehicle is reduced.

Fig. 15

## Description

### Technical Field

The present invention relates to a spatial stabilization apparatus, spatial stabilization control method and spatial stabilization control program.

### Background Art

There is a tracking apparatus that is mounted on a vehicle in order to track a moving target object. In such a tracking apparatus, a target pointing apparatus that controls an object to be controlled (hereinafter also referred to as "controlled object") included in the tracking apparatus is used in order to track (or follow) a target object.

However, in such a tracking apparatus, there have been cases where trembling occurs in the vehicle and is transferred from the vehicle to the controlled object 1, thus making the tracking of the target object impossible. Therefore, this kind of tracking apparatuses may use a spatial stabilization apparatus that can put the controlled object 1 in a standstill state in an inertial space and thereby perform spatial stabilization in order to eliminate the trembling effect. Patent Literature 1 discloses an example of such spatial stabilization apparatuses. Fig. 16 shows a block diagram of a spatial stabilization apparatus disclosed in Patent Literature 1.

The controlled object 1 is connected to a fixing section, to which the spatial stabilization apparatus is attached, in such a manner that the controlled object 1 can be rotated around one rotation axis

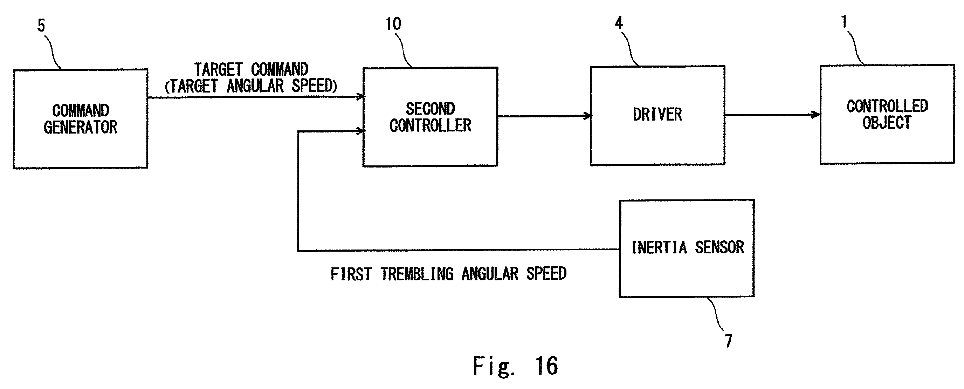

(first rotation axis). The angular speed of the controlled object 1 around the first rotation axis of the fixing section, which occurs in the fixing section, is defined as "first angular speed". As shown in Fig. 16, an inertia sensor 7 is fixed to the fixing section and outputs a signal indicating an angular speed, which is the trembling around the first rotation axis of the fixing section occurring in the fixing section (hereinafter called "first trembling angular speed"). A command generator 5 outputs a signal indicating a target angular speed for the first angular speed. A second controller 10 receives the signals indicating the target angular speed and the detected first trembling angular speed (hereinafter called "current trembling angular speed"), and outputs a signal for controlling the controlled object 1 to a driver 4. The driver 4 drives the rotation of the controlled object 1 around the first rotation axis (first trembling angular speed) based on the signal for controlling the first trembling angular speed.

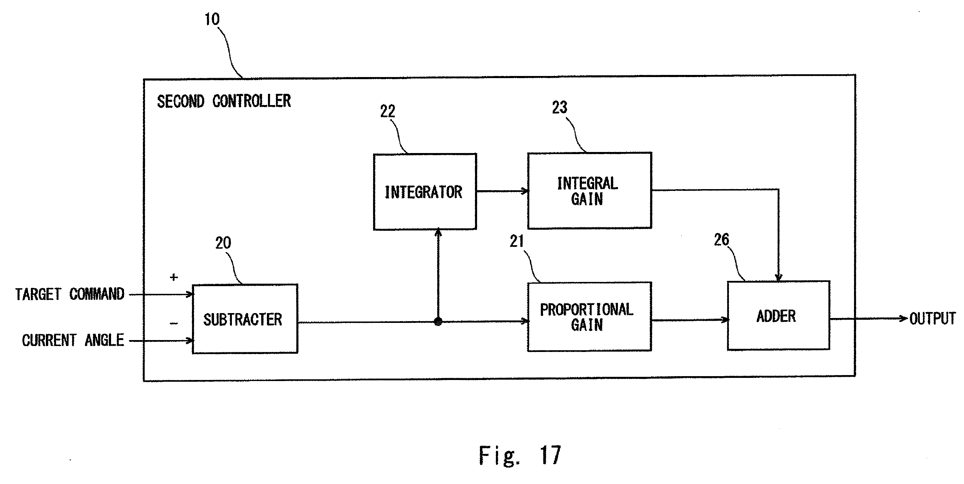

Fig. 17 shows a PI controller as an example of the second controller 10. A subtracter 20 subtracts the current trembling angular speed from a target command and an integrator 22 performs integral processing on the output of the subtracter 20. Further, an integral gain 23 supplies a result that is obtained by multiplying the output of the integrator 22 by an integral gain coefficient to an adder 26. Meanwhile, a proportional gain 21 supplies a result that is obtained by multiplying the output of the subtracter 20 by a proportional gain coefficient to the adder 26. The adder 26 outputs a result that is obtained by adding the output of the integral gain 23 to the output of the proportional gain 21 to the driver 4.

With the above-described configuration, the spatial stabilization apparatus disclosed in Patent Literature 1 sets the target angular speed of the target command to zero and thereby detects the first trembling angular speed around the first rotation axis, which occurs in the fixing section, and drives the controlled object 1 around the first rotation axis at an angular speed that is obtained reversing the polarity (i.e., plus and minus) of the first trembling angular speed. It is possible to eliminate the trembling, which occurs in the fixing section, in the controlled object 1 and thereby spatially stabilize the controlled object 1.

### Citation List

### Patent Literature

Patent Literature 1: Japanese Unexamined Utility Model Application Publication No. H05-079299

### Summary of Invention

### Technical Problem

However, the spatial stabilization apparatus disclosed in Patent Literature 1 cannot perform spatial stabilization while pointing the controlled object to an arbitrary target angle.

To perform spatial stabilization in the spatial stabilization apparatus disclosed in Patent Literature 1, the target speed is set to zero and the first trembling angular speed around the first rotation axis, which occurs in the fixing section, i.e., the controlled object 1 is rotated at the same angular speed as the first trembling angular speed in the direction opposite to the first trembling angular speed, so that the trembling of the fixing section is eliminated in the controlled object 1. To point the controlled object 1 to an arbitrary target angle, it is necessary to arbitrarily change the target angular speed. However, when the target angular speed is set to a value other than zero, the spatial stabilization cannot be carried out.

The present invention has been made in view of the above-described problem and an object thereof is to provide a spatial stabilization apparatus capable of performing spatial stabilization while performing target tracking.

**Solution to Problem**

A spatial stabilization apparatus according to the present invention is

a spatial stabilization apparatus that is mounted on a vehicle and performs control so that an object to be controlled is stabilized in an inertial space, the spatial stabilization apparatus including:

the object to be controlled supported on the vehicle in such a manner that the object to be controlled can be rotated;

angle detection means for detecting an angle of the object to be controlled and outputting the detected angle as a detection angle signal;

first command generation means for outputting a target angle command and a target angular speed command for the object to be controlled;

an inertia sensor that detects an angular speed of the object to be controlled and outputs the detected angular speed as a detection angular speed signal;

first subtraction means for obtaining a difference between the target angular speed command and the detected angular speed and outputting the difference as a differential angular speed signal; and

first control means for generating a drive control signal based on the differential angular speed signal and a difference between the target angle command and the detected angle, in which

the spatial stabilization apparatus controls a rotation of the object to be controlled so that an effect on the object to be controlled caused by a movement of the vehicle is reduced.

The above-described configuration can make it possible to perform spatial stabilization while performing target tracking.

**Advantageous Effects of Invention**

According to the present invention, it is possible to provide a spatial stabilization apparatus capable of performing spatial stabilization while performing target tracking.

**Brief Description of Drawings**

Fig. 1 is a block diagram showing a spatial stabilization apparatus according to a first exemplary embodiment;

Fig. 2 is a block diagram showing the main part of the spatial stabilization apparatus according to the first exemplary embodiment;

Fig. 3 is a block diagram showing the main part of the spatial stabilization apparatus according to the first exemplary embodiment;

Fig. 4A is a graph showing output results of the main part of the spatial stabilization apparatus according to the first exemplary embodiment;

Fig. 4B is a graph showing output results of the main part of the spatial stabilization apparatus according to the first exemplary embodiment;

Fig. 4C is a graph showing output results of the main part of the spatial stabilization apparatus according to the first exemplary embodiment;

Fig. 4D is a graph showing output results of the main part of the spatial stabilization apparatus according to the first exemplary embodiment;

Fig. 4E is a graph showing output results of the main part of the spatial stabilization apparatus according to the first exemplary embodiment;

Fig. 5A is a graph showing output results of the main part of the spatial stabilization apparatus according to the first exemplary embodiment;

Fig. 5B is a graph showing output results of the main part of the spatial stabilization apparatus according to the first exemplary embodiment;

Fig. 5C is a graph showing output results of the main part of the spatial stabilization apparatus according to the first exemplary embodiment;

Fig. 5D is a graph showing output results of the main part of the spatial stabilization apparatus according to the first exemplary embodiment;

Fig. 6A is a graph showing output results of the main part of the spatial stabilization apparatus according to the first exemplary embodiment;

Fig. 6B is a graph showing output results of the main part of the spatial stabilization apparatus according to the first exemplary embodiment;

Fig. 6C is a graph showing output results of the main part of the spatial stabilization apparatus according to the first exemplary embodiment;

Fig. 6D is a graph showing output results of the main part of the spatial stabilization apparatus according to the first exemplary embodiment;

Fig. 6E is a graph showing output results of the main part of the spatial stabilization apparatus according to the first exemplary embodiment;

Fig. 7A is a graph showing output results of the main part of the spatial stabilization apparatus according to the first exemplary embodiment;

Fig. 7B is a graph showing output results of the main part of the spatial stabilization apparatus according to the first exemplary embodiment;

Fig. 7C is a graph showing output results of the main part of the spatial stabilization apparatus according to the first exemplary embodiment;

Fig. 7D is a graph showing output results of the main part of the spatial stabilization apparatus according to the first exemplary embodiment;

Fig. 8A is a graph showing output results of the main part of the spatial stabilization apparatus according to the first exemplary embodiment;

Fig. 8B is a graph showing output results of the main part of the spatial stabilization apparatus according to the first exemplary embodiment;

Fig. 8C is a graph showing output results of the main part of the spatial stabilization apparatus according to the first exemplary embodiment;

Fig. 8D is a graph showing output results of the main part of the spatial stabilization apparatus according to the first exemplary embodiment;

Fig. 8E is a graph showing output results of the main part of the spatial stabilization apparatus according to the first exemplary embodiment;

Fig. 9A is a graph showing output results of the main part of the spatial stabilization apparatus according to the first exemplary embodiment;

Fig. 9B is a graph showing output results of the main part of the spatial stabilization apparatus according to the first exemplary embodiment;

Fig. 9C is a graph showing output results of the main part of the spatial stabilization apparatus according to the first exemplary embodiment;

Fig. 9D is a graph showing output results of the main part of the spatial stabilization apparatus according to the first exemplary embodiment;

Fig. 9E is a graph showing output results of the main part of the spatial stabilization apparatus according to the first exemplary embodiment;

Fig. 10 is a block diagram showing a spatial stabilization apparatus according to a second exemplary embodiment;

Fig. 11 is a block diagram showing a spatial stabilization apparatus according to a third exemplary embodiment;

Fig. 12 is a block diagram showing a spatial stabilization apparatus according to a fourth exemplary embodiment;

Fig. 13 is a block diagram showing a spatial stabilization apparatus according to a fifth exemplary embodiment;

Fig. 14 is a block diagram showing a spatial stabilization apparatus according to a sixth exemplary embodiment;

Fig. 15 is a block diagram showing a spatial stabilization apparatus according to a seventh exemplary embodiment;

Fig. 16 is a block diagram showing a spatial stabilization apparatus in related art; and

Fig. 17 is a block diagram showing a PI controller.

Description of Embodiments

(First exemplary embodiment)

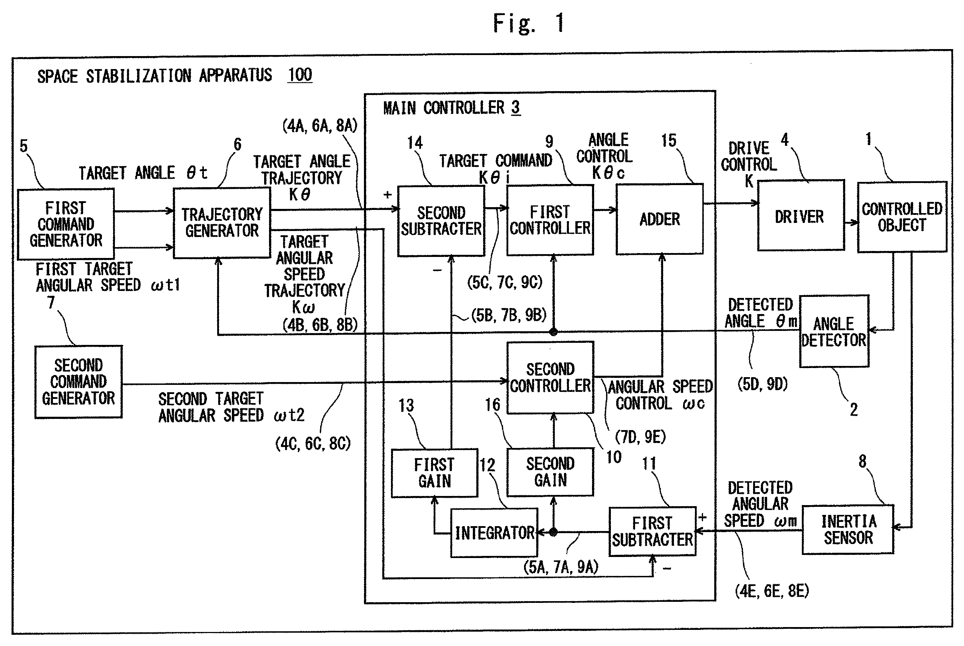

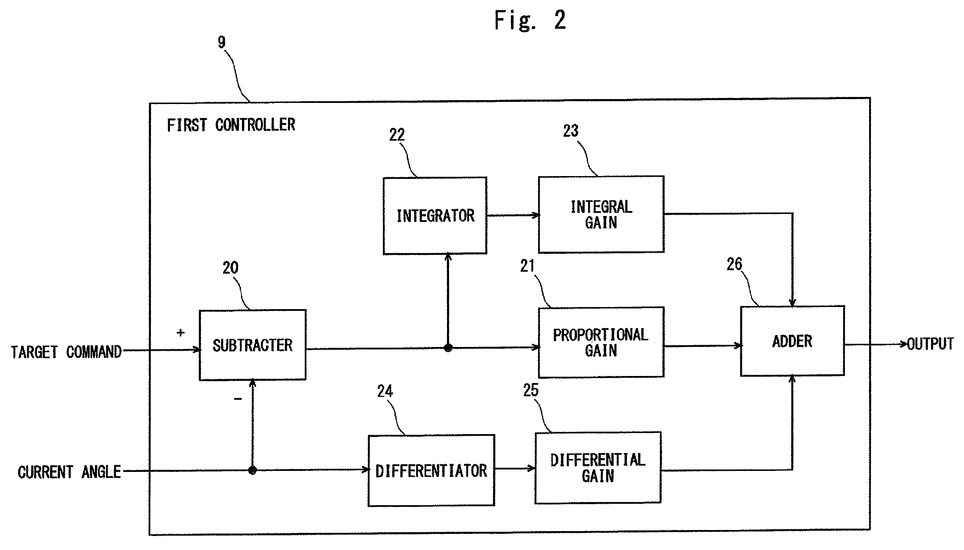

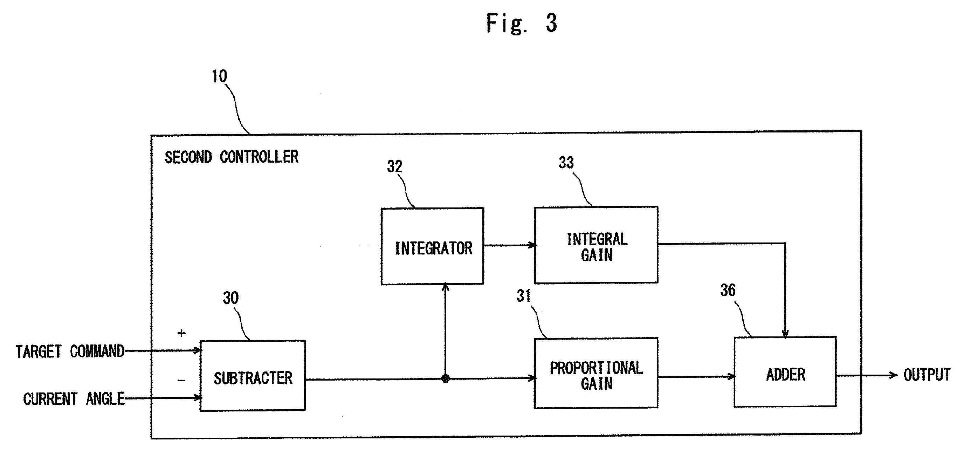

A spatial stabilization apparatus according to a first exemplary embodiment is explained with reference to Figs. 1 to 3. Fig. 1 is a block diagram showing a spatial stabilization apparatus according to the first exemplary embodiment. Each of Figs. 2 and 3 shows a block diagram showing the main part of the spatial stabilization apparatus according to the first exemplary embodiment.

As shown in Fig. 1, the spatial stabilization apparatus 100 includes an object to be controlled 1 (hereinafter referred to as "controlled object 1 "), an angle detector 2, a main controller 3, a first command generator 5, a trajectory generator 6, a second command generator 7, and an inertia sensor 8. The spatial stabilization apparatus 100 is attached to a vehicle (not shown) and used to stabilize the controlled object 1 in an inertial space so that the controlled object 1 is not affected by trembling occurring in the vehicle.

The controlled object 1 is an object that is controlled to track (i.e., follow) a target. The controlled object 1 is supported on a support section fixed to a vehicle (not shown) in such a manner that the controlled object 1 can be rotated around a first rotation axis. For example, the controlled object 1 is supported on the support section through a gimbal mechanism.

The angle detector 2 detects the angle of the controlled object 1 around the first rotation axis with respect to the support section. The angle detector 2 outputs a signal indicating the detected angle $\theta m$ as a detection angle signal to the main controller 3 and the trajectory generator 6. Changes in the detected angle $\theta m$ result from driving actions for the controlled object 1 performed by a driver 4 and trembling that occurs in the vehicle. A change in a detected angular speed resulting from the driving action is referred to as "drive detected angular speed $\omega d$" and a change in the detected angular speed resulting from the trembling is referred to as "trembling detected angular speed $\omega g$".

The first command generator 5 can include, for example, an image pickup unit, an image processing unit, and so on (which are not shown), and sets a target angle $\theta t$ and a first target angular speed $\omega t1$ through measurement and calculation and generates signals indicating the target angle $\theta t$ and the first target angular speed $\omega t1$. The first command generator 5 outputs the signals indicating the target angle $\theta t$ and the first target angular speed $\omega t1$ to the trajectory generator 6. Note that the target angle $\theta t$ and the first target angular speed $\omega t1$ are an angle and an angular speed that can be used as a target command(s) for making the controlled object 1 track (i.e., follow) the target.

The trajectory generator 6 generates signals indicating a target angle trajectory $K\theta$ and a target angular speed trajectory $K\omega$ based on the target angle $\theta t$ and the first target angular speed $\omega t1$, respectively, as well as the detected angle $\theta m$. The trajectory generator 6 outputs the signals indicating the target angle trajectory $K\theta$ and the target angular speed trajectory $K\omega$ to the main controller 3. Note that the target angle trajectory $K\theta$ means a process of changes of the angle $\theta$ at which the controlled object 1 should be pointed over time from the detected angle $\theta m$ to the target angle $\theta t$. For example, the target angle trajectory $K\theta$ is a trajectory that is calculated so that the angle of the controlled object 1 can smoothly reach the target angle from the current state of the controlled object 1 such as the current angular position of the controlled object 1 while taking the current state into consideration. The target angular speed trajectory $K\omega$ means a process of changes of the angular speed $\omega$ at which the controlled object 1 should move over time for making the angle of the controlled object 1 follow the target angle trajectory $K\theta$. For example, the target angular speed trajectory $K\omega$ is a trajectory that is calculated so that the angular speed of the controlled object 1 can smoothly reach the target angular speed from the current state of the controlled object 1 such as the current angular position of the controlled object 1 while taking the current state into consideration. For example, even when the target angle is changed from the target angle $\theta t$ to a new target angle $\theta t1$ during the process of driving the controlled object 1 toward the target angle $\theta t$, the trajectory generator 6 can correct the target angle trajectory $K\theta$ and the target angular speed trajectory $K\omega$ and thereby generate a new target angle trajectory $K\theta 1$ and a new target angular speed trajectory $K\omega 1$. In this way, even when the target angle is changed, the controlled object 1 can be made to quickly track (i.e., follow) the target in a more reliable manner.

The second command generator 7 outputs a signal indicating a second target angular speed $\omega t2$ as a second target command to the main controller 3.

The inertia sensor 8 is a sensor capable of detecting an angular speed or the like. The inertia sensor 8 is mounted on the controlled object 1, and detects the angular speed $\theta$ of the controlled object 1 and outputs a signal indicating the detected angular speed $\omega m$ as a detection angular speed signal to the main controller 3.

The main controller 3 generates a drive control signal K for controlling the angle $\theta$ and the angular speed $\omega$ of the controlled object 1 based on the detected angle $\theta m$, the target angle trajectory $K\theta$, the target angular speed trajectory $K\omega$, the second target angular speed $\omega t2$, and the detected angular speed $\omega m$. The main controller 3 outputs this drive control signal K to the driver 4. Note that the configuration of the main controller 3 is described later.

The driver 4 is a driving source for driving the controlled object 1. Examples of the driving source include a motor and an actuator. The driver 4 can drive the controlled object 1 at a drive angular speed $\omega s$ based on the drive control signal K supplied from the main controller 3 and thereby control the angle $\theta$ and the angular speed $\omega$ of the controlled object 1.

Details of the main controller 3 are explained hereinafter. The main controller 3 includes a first controller 9, a second controller 10, a first subtracter 11, an integrator 12, a first gain 13, a second subtracter 14, an adder 15, and a second gain 16.

The first subtracter 11 subtracts, from the detected angular speed $\omega m$ (i.e., the output of the inertia sensor 8), a target angular speed at the time when the detected angular speed $\omega m$ is detected. This target angular speed at the time of the detection of the detected angular speed $\omega m$ can be obtained from the target angular speed trajectory $K\omega$.

The first subtracter 11 outputs a signal indicating the result of this subtraction as a differential angular speed signal to the integrator 12 and the second gain 16.

The integrator 12 integrates the output of the first subtracter 11 and outputs a signal indicating the integration result to the first gain 13.

The first gain 13 is an amplifier that multiplies the output value by a predetermined first gain coefficient and thereby amplifies the output value. The first gain 13 multiplies the output of the integrator 12 by the predetermined first gain coefficient and outputs a signal indicating this multiplication result to the second subtracter 14.

The second subtracter 14 subtracts the output of the first gain 13 from the target angle trajectory $K\theta$ and outputs a signal indicting this subtraction result as a target command $K\theta i$ to the first controller 9.

For the first controller 9, a PID controller or a PI controller, for example, can be used. The first controller 9 generates an angle control signal $K\theta c$ for controlling the angle of the controlled object 1 based on the target command $K\theta i$ and the detected angle $\theta m$. The first controller 9 outputs this angle control signal $K\theta c$ to the adder 15. Note that the configuration of the first controller 9 is described later.

Similarly to the first gain 13, the second gain 16 is an amplifier that multiplies the output value by a predetermined second gain coefficient and thereby amplifies the output value. The second gain 16 multiplies the output of the first subtracter 11 by the predetermined second gain coefficient and outputs a signal indicating this multiplication result to the second controller 10.

The second controller 10 generates an angular speed control signal $K\omega c$ for controlling the angular speed of the controlled object 1 according to the second target angular speed $\omega$ and the output of the second gain 16. The second controller 10 outputs the angular speed control signal $K\omega c$ to the adder 15. Note that the configuration of the second controller 10 is described later.

The adder 15 adds the angle control signal $K\theta c$ to the angular speed control signal $K\omega c$, and thereby outputs a drive control signal K for controlling the angle and the angular speed of the controlled object 1 to the driver 4.

Details of the first controller 9 are explained hereinafter. A case where a PID controller is used as the first controller 9 is explained. Fig. 2 shows a block diagram showing a configuration of the PID controller. As shown in Fig. 2, the first controller 9 includes a subtracter 20, a proportional gain 21, an integrator 22, an integral gain 23, a differentiator 24, a differential gain 25, and an adder 26.

The subtracter 20 subtracts the detected angle $\theta m$ from the target command $K\theta i$ and outputs a signal indicting this subtraction result to the proportional gain 21 and the integrator 22.

The proportional gain 21 multiplies the output of the subtracter 20 by a proportional gain coefficient and outputs a signal indicting this multiplication result to the adder 26.

The integrator 22 performs integral processing on the output of the subtracter 20 and outputs a signal indicting this integral processing result to the integral gain 23. The integral gain 23 multiplies the output of the integrator 22 by an integral gain coefficient and outputs a signal indicting this multiplication result to the adder 26.

The differentiator 24 performs differential processing on the detected angle $\theta m$ and outputs a signal indicting this differential processing result to the differential gain 25. The differential gain 25 multiplies the output of the differentiator 24 by a differential gain coefficient and outputs a signal indicting this multiplication result to the adder 26.

The adder 26 adds up the outputs of the integral gain 23, the proportional gain 21, and the differential gain 25, and outputs a signal indicting this addition result as an angle control signal $K\theta c$ to the adder 15.

Next, details of the second controller 10 are explained. A case where a PI controller is used as the second controller 10 is explained. Fig. 3 shows a block diagram showing a configuration of the PI controller. As shown in Fig. 3, the second controller 10 includes a subtracter 30, a proportional gain 31, an integrator 32, an integral gain 33, and an adder 36.

The subtracter 30 subtracts the output of the second gain 16 from the second target angular speed $\omega t2$ and outputs a signal indicting this subtraction result to the proportional gain 31 and the integrator 32.

The proportional gain 31 multiplies the output of the subtracter 30 by a predetermined gain coefficient and outputs a signal indicting this multiplication result to the adder 36.

The integrator 32 performs integral processing on the output of the subtracter 30 and outputs a signal indicting this integral processing result to the integral gain 33. The integral gain 33 multiplies the output of the integrator 32 by a predetermined integral gain coefficient and outputs a signal indicting this multiplication result to the adder 36.

The adder 36 adds the output of the integral gain 33 to the output of the proportional gain 31, and outputs a signal indicting this addition result as an angular speed control signal $K\omega c$ to the adder 15.

(Operation)

Next, an operation of the spatial stabilization apparatus according to the first exemplary embodiment is explained. Specifically, an operation in a case where target tracking is performed in a state where no trembling is occurring in the vehicle (first operation example), an operation in a case where spatial stabilization is performed without performing target tracking in a state where trembling is occurring in the vehicle (second operation example), and an operation in a case where target tracking and spatial stabilization are performed in a state where trembling is occurring in the vehicle (third operation example) are explained.

(First operation example)

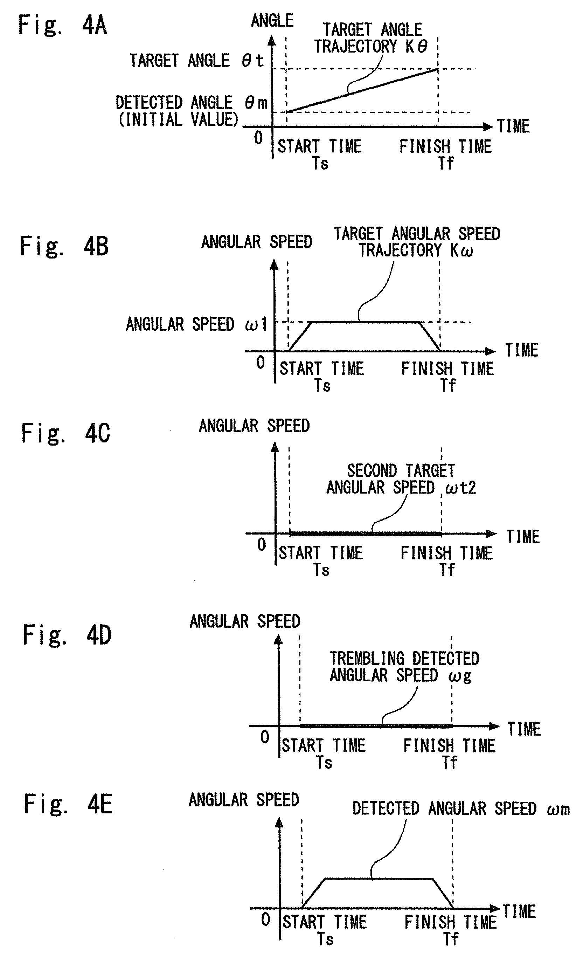

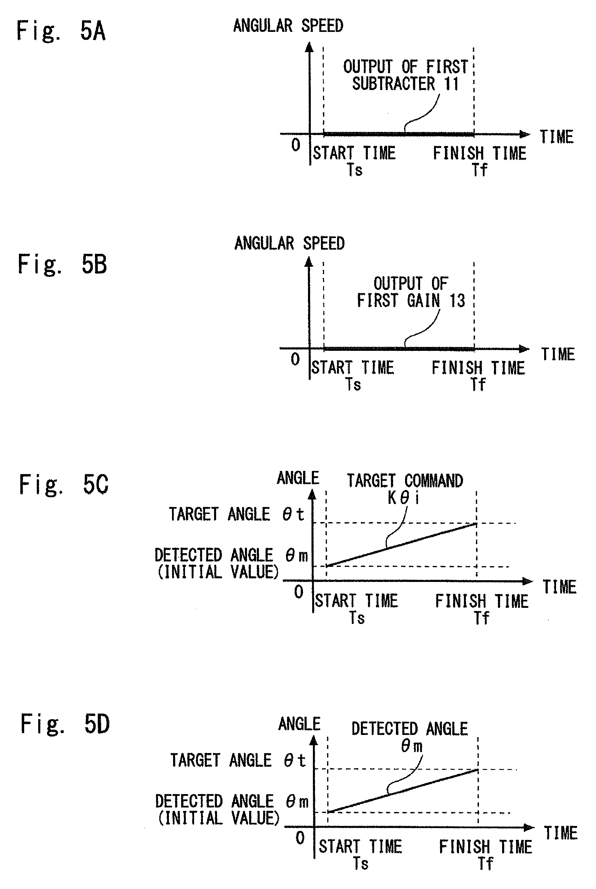

Firstly, an operation in a case where target tracking is performed in a state where no trembling is occurring in the vehicle is explained with reference to Figs. 4A-4E and 5A-5D as well as Fig. 1. Figs. 4A-4E and 5A-5D show output results of the main part of the spatial stabilization apparatus according to the first exemplary embodiment. For easier correspondences among the figures, points at which waveforms shown in Figs. 4A-4E and 5A-5D are obtained are indicated by parenthesized symbols in Fig. 1.

Firstly, the first command generator 5 sets a target angle $\theta t$ and a first target angular speed $\omega t1$, and outputs signals indicating these target values to the trajectory generator 6. The angle detector 2 detects a detected angle $\theta m$ and outputs a signal indicting this detected angle to the trajectory generator 6.

Next, the trajectory generator 6 generates a target angle trajectory $K\theta$ that starts at the detected angle $\theta m$ (initial value) and reaches the target angle $\theta t$. As shown in Fig. 4A, the target angle trajectory $K\theta$ is, for example, a trajectory that is drawn so that the angle of the controlled object changes from the detected angle $\theta m$ (initial value) to the target angle $\theta t$ in a period from a target tracking start time Ts to a finish time Tf. Further, the trajectory generator 6 generates a target angular speed trajectory $K\omega$ by performing differential processing and the like on the target angle trajectory $K\theta$. As shown in Fig. 4B, the target angular speed trajectory Eco immediately rises to a predetermined angular speed $\omega 1$ at the start time Ts, remains at the angular speed $\omega 1$ immediately before the finish time Tf, and falls to zero at the finish time Tf.

Further, the second command generator 7 outputs a signal indicting a second target angular speed $\omega t2$ as a second target angular speed command to the second controller. As shown in Fig. 4C, the second target angular speed $\omega t2$ remains at zero from the start time Ts to the finish time Tf.

Further, the inertia sensor 8 outputs a signal indicting a detected angular speed $\omega m$ of the controlled object 1 to the first subtracter 11. Since no trembling is occurring in the vehicle, a trembling detected angular speed $\omega g$, which is caused by trembling in the controlled object 1, remains at zero from the start time Ts to the finish time Tf as shown in Fig. 4D. Therefore, as shown in Fig. 4E, the detected angular speed $\omega m$ changes as if to conform to the target angular speed trajectory $K\omega$ from the start time Ts to the finish time Tf.

The first subtracter 11 subtracts an angular speed corresponding to the time of the subtraction from the detected angular speed $\omega m$ based on the target angular speed trajectory $K\omega$, and outputs a signal indicting this subtraction result as a differential angular speed signal to the integrator 12. Since the detected angular speed $\omega m$ changes as if to conform to the target angular speed trajectory $K\omega$ from the start time Ts to the finish time Tf, the output of the first subtracter 11 continuously remains at zero from the start time Ts to the finish time Tf as shown in Fig. 5A.

The second controller 10 generates an angular speed control signal $K\omega c$ by subtracting the output of the second gain 16 from the second target angular speed $\omega t2$, and outputs a signal indicting the generated angular speed control signal $K\omega c$ as a second control signal to the adder 15. Since the second target angular speed $\omega t2$ and the output of the second gain 16 continuously remain zero from the start time Ts to the finish time Tf, the angular speed control signal $K\omega c$ is continuously zero from the start time Ts to the finish time Tf.

The integrator 12 outputs a result obtained by integrating the output of the first subtracter 11 to the first gain 13. The first gain 13 outputs a signal indicating a result that is obtained by multiplying the output of the integrator 12 by a first gain coefficient to the second subtracter 14. As shown in Fig. 5A, the output of the first subtracter 11 continuously remains at zero from the start time Ts to the finish time Tf. Therefore, as shown in Fig. 5B, the output of the first gain 13 is continuously zero from the start time Ts to the finish time Tf.

The second subtracter 14 subtracts the output of the first gain 13 from the target angle trajectory $K\theta$ and outputs a signal indicting this subtraction result as a target command $K\theta i$ to the first controller 9. Note that since the output of the first gain 13 (see Fig. 5B) continuously remains at zero from the start time Ts to the finish time Tf, the target command $K\theta i$ draws the same trajectory as the target angle trajectory $K\theta$ (see Fig. 4A) as shown in Fig. 5C. The first controller 9 outputs an angle control signal $K\theta c$ including the target command $K\theta i$ and the detected angle $\theta m$ to the adder 15.

The adder 15 adds the angular speed control signal $K\omega c$ to the angle control signal $K\theta c$ and thereby outputs a drive control signal K to the driver 4. Note that as described above, since the angular speed control signal $K\omega c$ is continuously zero from the start time Ts to the finish time Tf, the drive control signal K includes only the angle control signal $K\theta c$. Therefore, the driver 4 drives the controlled object 1 based on the angle control signal $K\theta c$. As a result, as shown in Fig. 5D, the detected angle $\theta m$ changes so as to draw the same trajectory as the target angle trajectory $K\theta$. That is, it is possible to control the angle of the controlled object 1 so that the controlled object 1 follows the target angle trajectory $K\theta$ and thereby perform the target tracking.

(Second operation example)

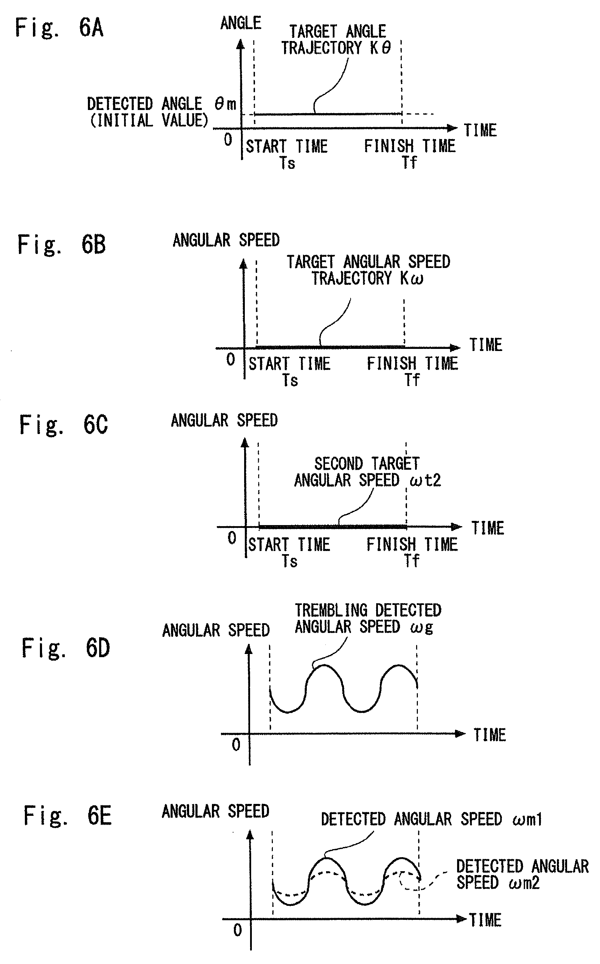

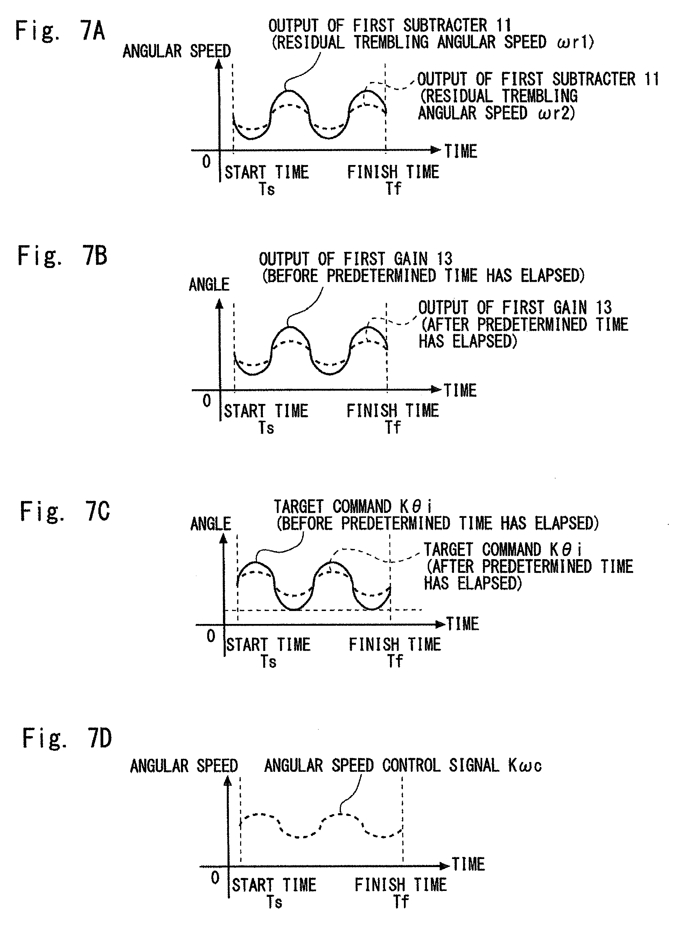

Next, an operation in a case where only spatial stabilization is performed without performing target tracking in a state where trembling is occurring in the vehicle is explained with reference to Figs. 6A-6E and 7A-7D as well as Fig. 1. Figs. 6A-6E and 7A-7D show output results of the main part of the spatial stabilization apparatus according to the first exemplary embodiment. For easier correspondences among the figures, points at which waveforms shown in Figs. 6A-6E and 7A-7D are obtained are indicated by parenthesized symbols in Fig. 1.

Firstly, the first command generator 5 generates a target angle θt and a first target angular speed ωt1, and outputs these target values to the trajectory generator 6. The angle detector 2 detects a detected angle θm of the controlled object 1 and outputs the detected angle as a detection angle signal to the trajectory generator 6.

Next, the trajectory generator 6 generates a target angle trajectory Kθ that starts at the detected angle θm (initial value) and reaches the target angle θt. Since target tracking is not performed in this operation example, the target angle trajectory Kθ continuously remains at zero from the start time Ts to the finish time Tf as shown in Fig. 6A. Further, the trajectory generator 6 generates a target angular speed trajectory Kω by performing differential processing and the like on the target angle trajectory Kθ. As shown in Fig. 6B, the target angular speed trajectory Kω continuously remains at zero from the start time Ts to the finish time Tf.

Further, the second command generator 7 outputs a signal indicting a second target angular speed ωt2 as a second target angular speed command to the second controller 10. As shown in Fig. 6C, the second target angular speed ωt2 remains at zero from the start time Ts to the finish time Tf.

Further, the inertia sensor 8 outputs a signal indicting a detected angular speed ωm of the controlled object 1 as a detection angular speed signal to the first subtracter 11. Since trembling is occurring in the vehicle, a trembling detected angular speed ωg, which is a detected angular speed resulting from the trembling, changes in a sine-wave pattern as shown in Fig. 6D. Therefore, as shown in Fig. 6E, a detected angular speed ωm1 temporarily changes in a sine-wave pattern. The spatial stabilization apparatus 100 operates so that the trembling detected angular speed ωg is reduced. Therefore, after a predetermined time has elapsed, a detected angular speed ωm2 exhibits a sine-wave-like waveform having an amplitude smaller than that of the detected angular speed ωm1.

The first subtracter 11 subtracts, from the detected angular speed ωm, an angular speed corresponding to the time of the detection from the target angular speed trajectory Kω, and outputs a signal indicting this subtraction result as a differential angular speed signal to the integrator 12 and the second gain 16. Since the detected angular speed ωm changes so as to draw roughly a sine-wave-like trajectory from the start time Ts to the finish time Tf, the output of the first subtracter 11 (residual trembling angular speed ωr1) temporarily changes in a sine-wave pattern from the start time Ts to the finish time Tf as shown in Fig. 7A. Next, the spatial stabilization apparatus 100 operates the controlled object 1 so that the trembling detected angular speed ωg is reduced. Further, after a predetermined time has elapsed, the output of the inertia sensor 8 indicates the detected angular speed ωm2 (see Fig. 6E). Then, the output of the first subtracter 11 (residual trembling angular speed ωr2) exhibits, after the predetermined time has elapsed, a sine-wave-like waveform having an amplitude smaller than that of the residual trembling angular speed ωr1. This amplitude reduction from the residual trembling angular speed ωr2 to the residual trembling angular speed ωr1 results from residual trembling. Note that the residual trembling means trembling that remains when the angular speed variations resulting from the trembling of the support section is reduced by spatial stabilization. The angular speed resulting from the residual trembling is referred to as "residual trembling angular speed ωr".

The second controller 10 generates an angular speed control signal Kωc by subtracting the output of the second gain 16 from the second target angular speed ωt2, performing PI control on this subtraction result, and reversing the polarity (i.e., plus and minus) of the residual trembling angular speed ωr, and outputs the generated angular speed control signal Kωc as a second control signal to the adder 15. The output of the second target angular speed ωt2 continuously remains at zero from the start time Ts to the finish time Tf, and the output of the second gain 16 changes in a sine-wave pattern from the start time Ts to the finish time Tf. As shown in Fig. 7D, the output of the angular speed control signal Kωc changes in a sine-wave pattern from the start time Ts to the finish time Tf while its polarity (i.e., plus and minus) is reversed from that of the output of the first subtracter 11. The angular speed control signal Kωc is a control signal for driving the controlled object 1 at the same angular speed as the residual trembling angular speed ωr in the direction opposite to the residual trembling angular speed ωr.

The integrator 12 integrates the output of the first subtracter 11 (see Fig. 7A) and outputs a signal indicating the integration result to the first gain 13. The first gain 13 multiplies the output of the integrator 12 by a predetermined first gain coefficient and outputs a signal indicating this multiplication result to the second subtracter 14. As shown in Fig. 7B, the output of the first gain 13 (before a predetermined time has elapsed) temporarily exhibits a trajectory in a sine-wave pattern from the start time Ts to the finish time Tf. After the spatial stabilization apparatus 100 operates the controlled object 1 so that the trembling detected angular speed ωg is reduced and a predetermined time has elapsed, the output of the inertia sensor 8 indicates the detected angular speed ωm2 (see Fig. 6E). Then, the output of the first gain 13 exhibits, after the predetermined time has elapsed, a sine-wave-like waveform having an amplitude smaller than that of the output of the first gain 13 exhibited before the predetermined time has elapsed. This amplitude reduction of the sine wave of the output of the first gain 13 through the lapse of the predetermined time results from the residual trembling.

The second subtracter 14 subtracts the output of the first gain 13 from the target angle trajectory Kθ and outputs the subtraction result as a target command Kθi to the first controller 9. Note that the target angle trajectory Kθ remains at zero from the start time Ts to the finish time Tf, and the output of the first gain 13 changes in a sine-wave pattern from the start time Ts to the finish time Tf. Therefore, as shown in Fig. 7C, the target command Kθi (before a predetermined time has elapsed) temporarily exhibits a waveform that is obtained by reversing the polarity (i.e., plus and minus) of the output of the first gain 13. After the spatial stabilization apparatus 100 operates the controlled object 1 so that the trembling detected angular speed ωg is reduced and a predetermined time has elapsed, the output of the inertia sensor 8 indicates the detected angular speed ωm2 (see Fig. 6E). Then, the target command Kθi exhibits, after the predetermined time has elapsed, a sine-wave-like waveform having an amplitude smaller than that of the target command Kθi exhibited before the predetermined time has elapsed. This amplitude reduction of the sine wave of the target command Kθi through the lapse of the predetermined time results from the residual trembling. The first controller 9 outputs the angle control signal Kθc, which is generated from the target command Kθi and the detected angle θm, to the adder 15.

The adder 15 adds the angular speed control signal Kωc to the angle control signal Kθc, and thereby outputs a drive control signal K to the driver 4. The driver 4 drives the controlled object 1 based on the angular speed control signal Kωc and the angle control signal Kθc.

The first controller 9 controls the angle of the controlled object 1 by using a signal obtained by reversing the residual trembling component as the target command Kθi and using the output of the angle detector 2 as the detected angular speed ωm as shown in Fig. 7C, and thereby rotates the controlled object 1 at an angular speed equivalent to the residual trembling component in the direction opposite to the residual trembling component. As a result, the first controller 9 can eliminate the effect caused by the residual trembling component and perform the spatial stabilization.

It should be noted that when only the first controller 9 and the second controller 10 are used, the effect caused by the residual trembling component shown in Fig. 6E, rather than the trembling in the support section shown in Fig. 6D, is eliminated. Therefore, the residual trembling component is amplified to an amplitude comparable to that of the trembling in the support section (hereinafter called "support section trembling corresponding residual trembling component") by adjusting the angle control residual trembling angular speed component by using the first gain 13 and adjusting the angular speed control residual trembling component by using the second gain 16, and then by adding up the outputs of the first controller 9 and the second controller 10 through the adder 15. Further, the controlled object 1 is rotated in the direction opposite to that of the trembling of the support section by an amount equivalent to the support section trembling corresponding residual trembling component. As a result, the trembling in the support section is cancelled out and hence the controlled object 1 can be put in a standstill state in an inertial space. Therefore, accurate spatial stabilization can be performed.

(Third operation example)

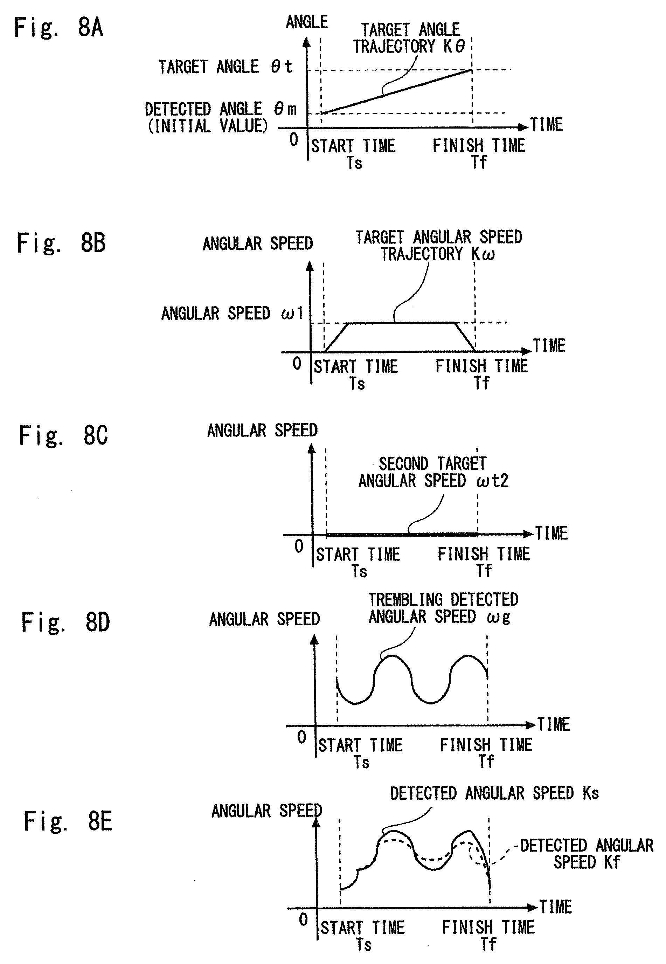

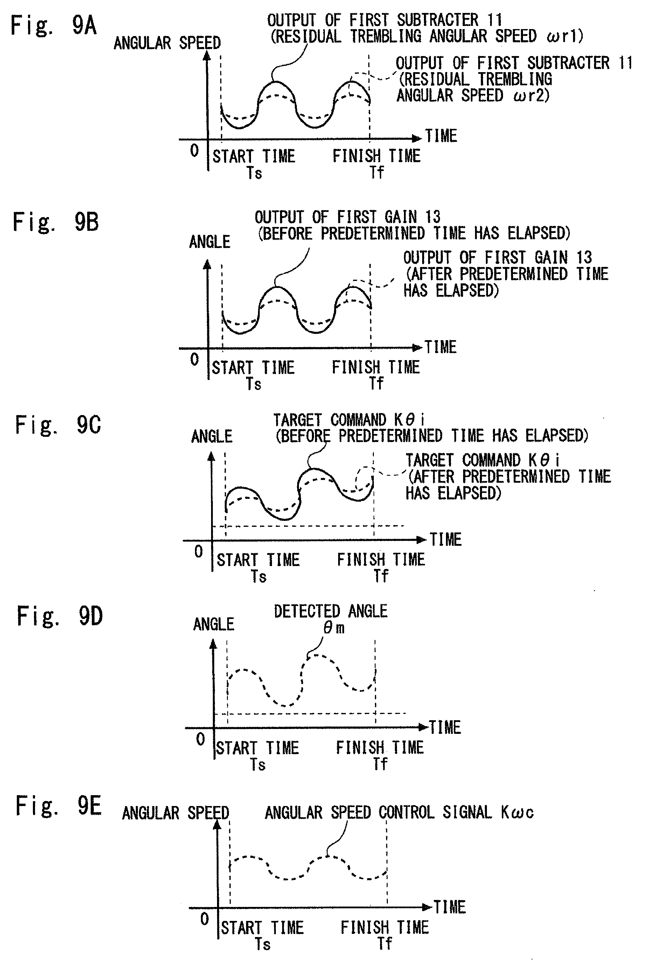

Finally, an operation in a case where target tracking and spatial stabilization are performed in a state where trembling is occurring in the vehicle with reference to Figs. 8A-8E and 9A-9E as well as Fig. 1. Figs. 8A-8E and 9A-9E show output results of the main part of the spatial stabilization apparatus according to the first exemplary embodiment. For easier correspondences among the figures, points at which waveforms shown in Figs. 8A-8E and 9A-9E are obtained are indicated by parenthesized symbols in Fig. 1.

Firstly, the first command generator 5 generates a target angle θt and a first target angular speed ωt1, and outputs these target values to the trajectory generator 6. The angle detector 2 detects a detected angle θm of the controlled object 1 and outputs the detected angle as a detection angle signal to the trajectory generator 6.

Next, the trajectory generator 6 generates a target angle trajectory Kθ that starts at the detected angle θm and reaches the target angle θt. As shown in Fig. 8A, for example, the target angle trajectory Kθ is a trajectory that is drawn so that the angle of the controlled object changes from the detected angle θm to the target angle θt in a period from a start time Ts to a finish time Tf. Further, the trajectory generator 6 generates a target angular speed trajectory Kω by performing differential processing and the like on the target angle trajectory Kθ. As shown in Fig. 8B, the target angular speed trajectory Kω immediately rises to a predetermined angular speed ω1 at the start time Ts, remains at the angular speed ω1 immediately before the finish time Tf, and falls to zero at the finish time Tf.

Further, the second command generator 7 outputs a signal indicting a second target angular speed ωt2 as a second target angular speed command to the second controller 10. As shown in Fig. 8C, the second target angular speed ωt2 remains at zero from the start time Ts to the finish time Tf.

Further, the inertia sensor 8 outputs a signal indicting a detected angular speed ωm of the controlled object 1 as a detection angular speed signal to the first subtracter 11. Since trembling is occurring in the vehicle, a trembling detected angular speed ωg, which is a detected angular speed resulting from the trembling, changes in a sine-wave pattern from the start time Ts to the finish time Tf as shown in Fig. 8D. Therefore, as shown in Fig. 8E, the output of the inertia sensor 8 (detected angular speed Kf) forms a waveform that is obtained by superposing the angular speed resulting from the residual trembling (residual trembling angular speed $\omega r$) onto the target angular speed trajectory K$\omega$ (see Fig. 8B).

The first subtracter 11 subtracts a corresponding angular speed in the target angular speed trajectory K$\omega$ (see Fig. 8B) from the output of the inertia sensor 8 (see Fig. 8E) and outputs a signal indicting the subtraction result as a differential angular speed signal to the second gain 16. As shown in Fig. 9A, the output of the first subtracter 11 (residual trembling angular speed $\omega r1$) temporarily changes in a sine-wave pattern from the start time Ts to the finish time Tf. Next, the spatial stabilization apparatus 100 operates the controlled object 1 so that the trembling detected angular speed $\omega g$ is reduced. Further, after a predetermined time has elapsed, the output of the inertia sensor 8 indicates the detected angular speed Kf (see Fig. 8E). Then, the output of the first subtracter 11 (residual trembling angular speed $\omega r2$) exhibits, after the predetermined time has elapsed, a sine-wave-like waveform having an amplitude smaller than that of the residual trembling angular speed $\omega r1$. This amplitude reduction from the residual trembling angular speed $\omega r2$ to the residual trembling angular speed $\omega r1$ results from residual trembling. The second gain 16 multiplies the output of the first subtracter 11 by a predetermined second gain coefficient and outputs a signal indicting this multiplication result to the second controller 10.

The second controller 10 subtracts the output of the second gain 16 from the second target angular speed $\omega t2$ and performs PI control on this subtraction result. By doing so, the second controller 10 generates an angular speed control signal K$\omega c$ exhibiting a waveform that is obtained by reversing the residual trembling angular speed $\omega r$ as shown in Fig. 9E. Further, the second controller 10 outputs the generated angular speed control signal K$\omega c$ as a second control signal to the adder 15 and performs angular speed control for the controlled object 1, i.e., controls the angular speed of the controlled object 1 so that the controlled object 1 is rotated at the same angular speed as the residual trembling angular speed $\omega r$ in the direction opposite to the residual trembling angular speed $\omega r$. By doing so, the second controller 10 can eliminate the effect caused by the residual trembling.

The integrator 12 outputs a result obtained by integrating the output of the first subtracter 11 (see Fig. 9A), and the first gain 13 multiplies the output of the integrator 12 by a first gain coefficient and outputs a signal indicting this multiplication result to the second subtracter. As shown in Fig. 9B, the output of the first gain 13 (before a predetermined time has elapsed) temporarily changes in a sine-wave pattern from the start time Ts to the finish time Tf. After the spatial stabilization apparatus 100 operates the controlled object 1 so that the trembling detected angular speed $\omega g$ is reduced and a predetermined time has elapsed, the output of the inertia sensor 8 indicates the detected angular speed Kf (see Fig. 8E). Then, the output of the first gain 13 exhibits, after the predetermined time has elapsed, a sine-wave-like waveform having an amplitude smaller than that of the output of the first gain 13 exhibited before the predetermined time has elapsed. The change in the output of the first gain 13 through the lapse of the predetermined time corresponds to the residual trembling angular speed $\omega r$, which is the result obtained by subtracting the angular speed variations by the tracking control to the target angle trajectory K$\theta$ for the controlled object 1 from the angular speed variations caused by the trembling.

The second subtracter 14 subtracts the output of the first gain 13 (see Fig. 9B) from the target angle trajectory K$\theta$ (see Fig. 8A) and outputs a signal indicting a target command K$\theta i$, which is the result of this subtraction, to the first controller 9. As shown in Fig. 9C, the target command K$\theta i$ (before a predetermined time has elapsed) has a waveform that is obtained by superposing a signal obtained by reversing the residual trembling angular speed $\omega r$ onto the target angular speed trajectory. After the spatial stabilization apparatus 100 operates the controlled object 1 so that the trembling detected angular speed $\omega g$ is reduced and a predetermined time has elapsed, the output of the inertia sensor 8 indicates the detected angular speed Kf (see Fig. 8E). Then, the target command K$\theta i$ exhibits, after the predetermined time has elapsed, a waveform having an amplitude smaller than that of the target command K$\theta i$ exhibited before the predetermined time has elapsed. This amplitude reduction of the target command K$\theta i$ through the lapse of the predetermined time results from the residual trembling.

The first controller 9 controls the angle of the controlled object 1 by using the signal obtained by superposing the reversed signal of the residual trembling angular speed $\omega r$ onto the target angular speed trajectory K$\omega$ as the target command K$\theta i$ (see Fig. 9C) and using the output of the angle detector 2 as the detected angle. This makes it possible to make the controlled object 1 follow the target angle trajectory K$\theta$ and thereby perform target tracking. Further, the angle of the controlled object 1 is controlled so that the controlled object 1 is rotated at the same angular speed as the residual trembling angular speed $\omega r$ in the direction opposite to the residual trembling angular speed $\omega r$. By doing so, it is possible to eliminate the effect caused by the residual trembling and perform the spatial stabilization.

Note that the first controller 9 and the second controller 10 eliminate the residual trembling angular speed $\omega r$ (see Fig. 9F). Therefore, the spatial stabilization using the first controller 9 or the second controller 10 alone cannot eliminate the trembling in the fixing section.

Therefore, the adder 15 adds up the control signals of the first controller 9 and the second controller 10, and thereby supplies the drive control signal to the driver 4. Further, the residual trembling component is amplified to an amplitude comparable to that of the trembling in the support section (hereinafter called "support section trembling corresponding residual trembling component") by adjusting the angle control residual trembling component by using the first gain 13 and adjusting the angular speed control residual trembling component by using the second gain 16. By doing so, the controlled object 1 is rotated in the direction opposite to the trembling of the support section by an amount equivalent to the support section trembling corresponding residual trembling component. As a result, the controlled object 1 cancels out the trembling in the support section and hence can be put in a standstill state in an inertial space. Therefore, accurate spatial stabilization can be performed.

Through the above-described operation, it is possible to make the controlled object 1 follow the target angle trajectory K$\theta$ and thereby perform target tracking by using the first controller 9. Further, it is possible to spatially stabilize the controlled object 1 by the first controller 9, the first gain 13, the second controller 10, and the second gain 16.

(Second exemplary embodiment)

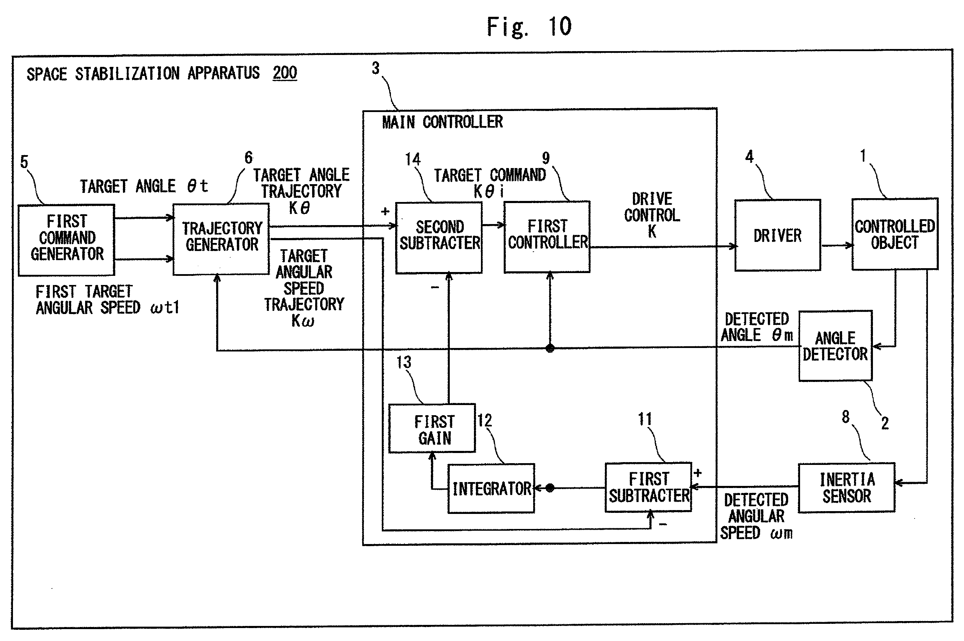

Next, a spatial stabilization apparatus according to a second exemplary embodiment is explained with reference to Fig. 10. Fig. 10 is a block diagram showing a spatial stabilization apparatus according to the second exemplary embodiment. When compared to the spatial stabilization apparatus according to the first exemplary embodiment, the configuration of the spatial stabilization apparatus according to the second exemplary embodiment is the same as that of the spatial stabilization apparatus according to the first exemplary embodiment except that the second command generator, the second controller, and the second gain are removed. For the same components/structures, the same symbols are assigned and their explanations are omitted.

The spatial stabilization apparatus 200 can make the controlled object 1 follow the target angle trajectory K$\theta$ and thereby track (i.e., follow) the target. Further, the spatial stabilization apparatus 200 rotates the controlled object 1 based on a signal indicting a result that is obtained by amplifying the residual trembling angular speed $\omega$r, which is the output of the first subtracter 11, by using the first gain 13 and reversing the polarity of the support section trembling corresponding residual trembling component. That is, it is possible to put the controlled object 1 in a standstill state in an inertial space and perform spatial stabilization.

Note that when the spatial stabilization apparatus 100 is used in a state where the second gain coefficient of the second gain 16 is set to zero, the output of the second gain 16 becomes zero and hence the detected angular speed of the second controller 10 becomes zero. Further, since the output of the second command generator 7 is also zero, the output of the second controller 10 also becomes zero. That is, when the spatial stabilization apparatus 100 is used in a state where the second gain coefficient of the second gain 16 is set to zero, a spatial stabilization apparatus having a configuration identical to that of the spatial stabilization apparatus 200 can be obtained.

(Third exemplary embodiment)

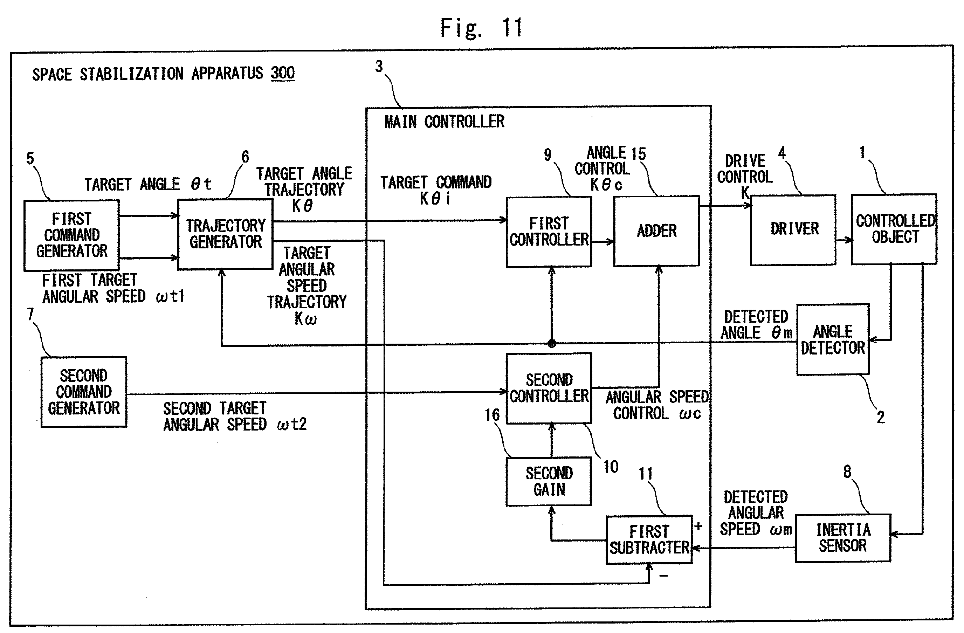

Next, a spatial stabilization apparatus according to a third exemplary embodiment is explained with reference to Fig. 11. Fig. 11 is a block diagram showing a spatial stabilization apparatus according to the third exemplary embodiment. When compared to the spatial stabilization apparatus according to the first exemplary embodiment, the configuration of the spatial stabilization apparatus according to the third exemplary embodiment is the same as that of the spatial stabilization apparatus according to the first exemplary embodiment except that the second subtracter 14, the integrator 12, and the first gain 13 are removed. For the same components/structures, the same symbols are assigned and their explanations are omitted.

As shown in Fig. 11, the spatial stabilization apparatus 300 can make the controlled object 1 follow the target angle trajectory K$\theta$ by using the first controller 9. Further, by using the second controller 10, the spatial stabilization apparatus 300 can rotate the controlled object 1 based on a result that is obtained by reversing the polarity (i.e., plus and minus) of the fixing section trembling corresponding residual trembling component, which is obtained by amplifying the residual trembling angular speed $\omega$r, which is the output of the first subtracter 11, by using the second gain 16. In this way, it is possible to put the controlled object 1 in a standstill state in an inertial space and perform spatial stabilization.

Note that when the spatial stabilization apparatus 100 is used in a state where the first gain coefficient of the first gain 13 is set to zero, a spatial stabilization apparatus having a configuration identical to that of the spatial stabilization apparatus 300 can be obtained. This is because when the spatial stabilization apparatus 100 is used in a state where the first gain coefficient of the first gain 13 is set to zero, the output of the first gain 13 becomes zero and hence the target command K$\theta$i becomes equal to the target angle trajectory K$\theta$.

(Fourth exemplary embodiment)

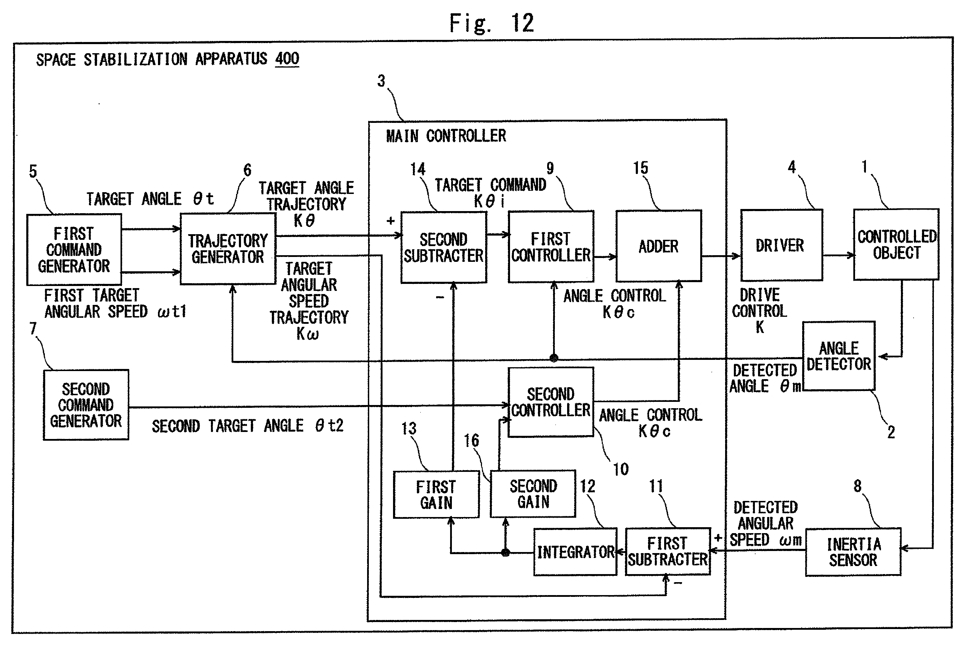

Next, a spatial stabilization apparatus according to a fourth exemplary embodiment is explained with reference to Fig. 12. Fig. 12 is a block diagram showing a spatial stabilization apparatus according to the fourth exemplary embodiment. When compared to the spatial stabilization apparatus according to the first exemplary embodiment, the configuration of the spatial stabilization apparatus according to the fourth exemplary embodiment is the same as that of the spatial stabilization apparatus according to the first exemplary embodiment except for the place where the integrator 12 is connected. For the same components/structures, the same symbols are assigned and their explanations are omitted.

In the spatial stabilization apparatus 400, the first gain 13 is connected to the branching part for branching to the first gain 13 and the second gain 16 through the integrator 12. The spatial stabilization apparatus 400 performs angle control, instead of performing angular speed control, by using the second controller 10. In this case, the PID controller shown in Fig. 2 is used as the second controller 10. The input to the second controller 10 is a result that is obtained by multiplying the output of the integrator 12 (angle-converted residual trembling angular speed ωr, i.e., a value obtained by converting the residual trembling angular speed ωr into an angle) by the second gain 16.

Even when the second controller 10 performs angle control, the fixing section trembling corresponding residual trembling component is obtained by adding a result obtained by multiplying the angle-converted residual trembling angular speed ωr by the second gain 16 to a result obtained by multiplying the angle-converted residual trembling angular speed ωr by the first gain 13. Further, the controlled object 1 is rotated based on a result that is obtained by reversing the polarity (i.e., plus and minus) of the fixing section trembling corresponding residual trembling component. That is, it is possible to put the controlled object 1 in a standstill state in an inertial space and perform spatial stabilization.

Further, the first controller 9 can make the controlled object 1 follow the target angle trajectory Kθ and perform target tracking.

(Fifth exemplary embodiment)

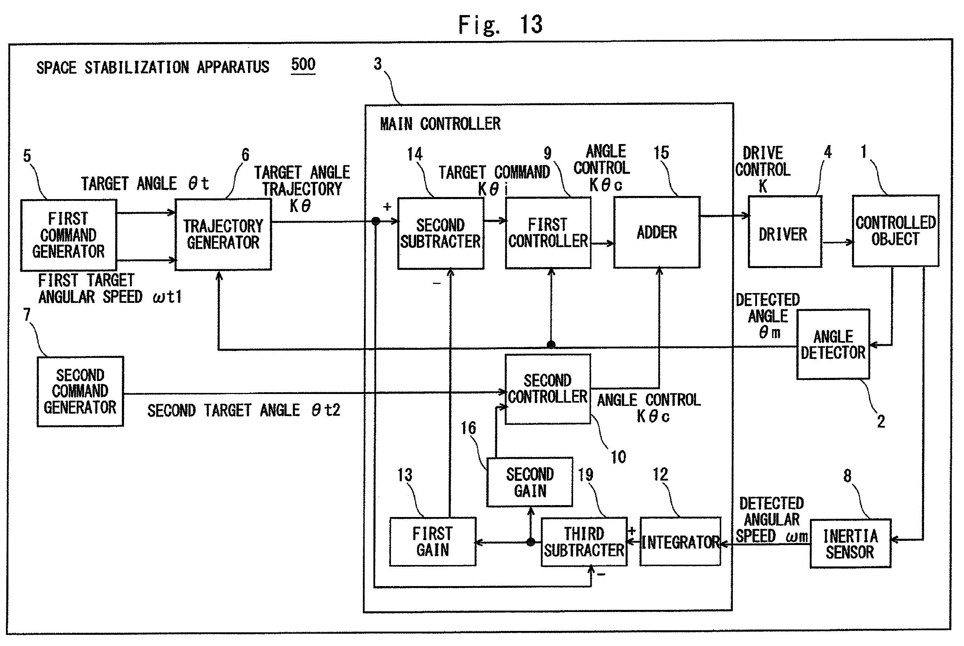

Next, a spatial stabilization apparatus according to a fifth exemplary embodiment is explained with reference to Fig. 13. Fig. 13 is a block diagram showing a spatial stabilization apparatus according to the fifth exemplary embodiment. When compared to the spatial stabilization apparatus according to the first exemplary embodiment, the configuration of the spatial stabilization apparatus according to the fifth exemplary embodiment is the same as that of the spatial stabilization apparatus according to the first exemplary embodiment except for the place where the first subtracter is connected. For the same components/structures, the same symbols are assigned and their explanations are omitted.

In the spatial stabilization apparatus 500, the branching point for branching to the first gain 13 and the second gain 16 is connected with the inertia sensor 8 through a third subtracter 19 and the integrator 12. Similarly to the spatial stabilization apparatus 400, the second controller 10 performs angle control in the spatial stabilization apparatus 500. In the spatial stabilization apparatus 500, the trajectory generator 6 outputs the target angle trajectory Kθ to the third subtracter 19. Further, in the spatial stabilization apparatus 500, the integrator 12 receives the output of the inertia sensor 8 before the third subtracter 19 receives it. The integrator 12 converts the output of the inertia sensor 8 from an angular speed component into an angle component and outputs a signal indicting the conversion result to the third subtracter 19. Since the output of the integrator 12 is the angle component, the third subtracter 19 subtracts the target angle trajectory Kθ from the output of the integrator 12.

This makes the output of the third subtracter 19 in the spatial stabilization apparatus 500 equivalent to the output of the first subtracter 11 in the spatial stabilization apparatus 400. Similarly to the spatial stabilization apparatus 400, the spatial stabilization apparatus 500 can make the controlled object 1 follow the target angle trajectory Kθ and thereby track (i.e., follow) the target objet by using the first controller 9. Further, the spatial stabilization apparatus 500 obtains the fixing section trembling corresponding residual trembling component by adding a result obtained by multiplying the angle-converted residual trembling angular speed ωr by the second gain 16 to a result obtained by multiplying the angle-converted residual trembling angular speed ωr by the first gain 13. Further, the spatial stabilization apparatus 500 rotates the controlled object 1 based on a result that is obtained by reversing the polarity (i.e., plus and minus) of the fixing section trembling corresponding residual trembling component. That is, it is possible to put the controlled object 1 in a standstill state in an inertial space and perform spatial stabilization.

(Sixth exemplary embodiment)

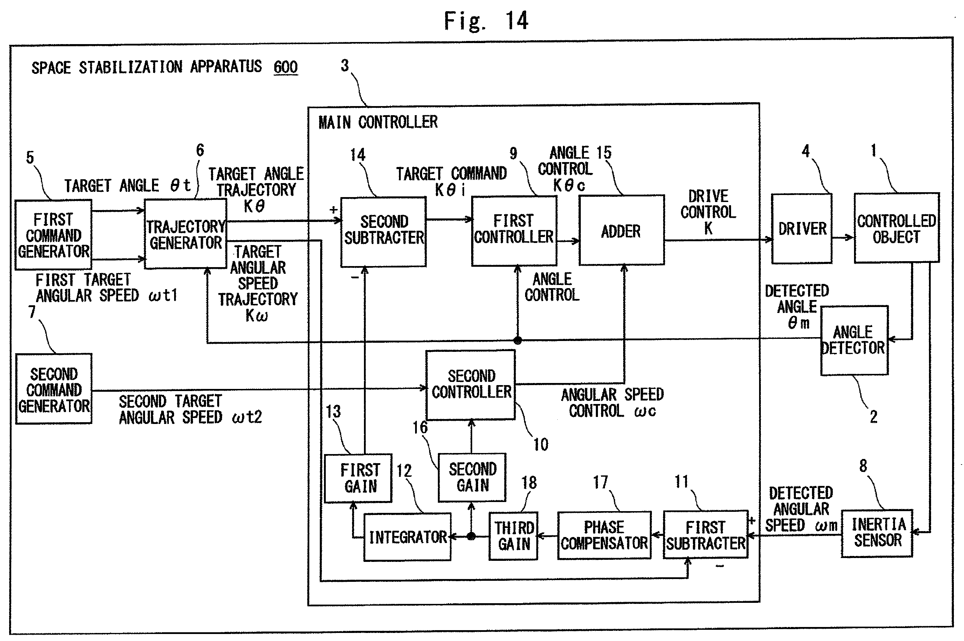

Next, a spatial stabilization apparatus according to a sixth exemplary embodiment is explained with reference to Fig. 14. Fig. 14 is a block diagram showing a spatial stabilization apparatus according to the sixth exemplary embodiment. When compared to the spatial stabilization apparatus according to the first exemplary embodiment, the configuration of the spatial stabilization apparatus according to the sixth exemplary embodiment is the same as that of the spatial stabilization apparatus according to the first exemplary embodiment except that the spatial stabilization apparatus according to the sixth exemplary embodiment includes a phase compensator and a third gain. For the same components/structures, the same symbols are assigned and their explanations are omitted.

A spatial stabilization apparatus 600 includes a phase compensator 17 and a third gain 18. The phase compensator 17 and the third gain 18 connects the first subtracter 11 to the branching part for branching into the integrator 12 and the second gain 16.

The phase compensator 17 can perform predetermined filtering processing on an input signal and thereby generate a signal whose phase is changed from that of the input signal, and output this generated signal. The filtering processing is performed based on, for example, a transfer function expressed by the below-shown Expression 1. The phase of the input signal changes according to a frequency(ies) included in the transfer function.

$$[\mathrm{Equation}\ 1]$$

$$\frac{s + 2\pi f_1}{s + 2\pi f_2}$$

where f1 and f2 are frequencies that can be arbitrarily determined by a user.

The third gain 18 is an amplifier that multiplies the obtained output by a third gain coefficient and outputs a signal indicting this multiplication result. The third gain 18 amplifies the output of the phase compensator 17 and outputs the amplified signal to the second gain 16 and the integrator 12.

Incidentally, if the spatial stabilization apparatus match the angle variations caused by the trembling in the support section with the angle variations of the controlled object 1 by the driving by the driver 4, the spatial stabilization apparatus can eliminate the trembling of the support section in the controlled object 1 and thereby achieve high spatial stabilization performance. However, the inertia sensor 8 has a restriction on the detection band of the sensor itself and hence cannot completely detect the trembling of the support section. A gain difference and a phase difference occur between the trembling of the fixing section and the output of the inertia sensor 8. Further, a gain difference and a phase difference also occur between the output of the inertia sensor 8 and the controlled object 1.

In the spatial stabilization apparatus 600, the phase compensator 17 can eliminate the phase difference between the trembling of the support section and the angular variations of the controlled object 1. Further, the third gain 18 can eliminate the gain difference between the trembling of the support section and the angular variations of the controlled object 1. The spatial stabilization apparatus 600 can achieve higher spatial stabilization performance.

Note that in the sixth exemplary embodiment, the first subtracter 11 is connected to the branching part for branching into the integrator 12 and the second gain 16 through the phase compensator 17 and the third gain 18. It should be noted that the connection order of the phase compensator 17 and the third gain 18 can be reversed.

(Seventh exemplary embodiment)

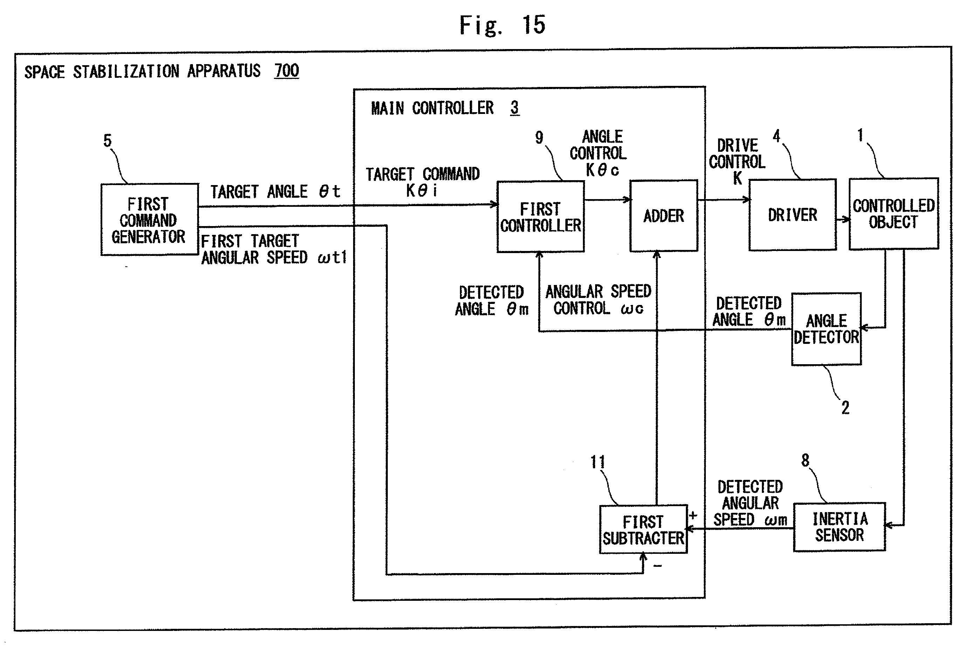

Next, a spatial stabilization apparatus according to a seventh exemplary embodiment is explained with reference to Fig. 15. Fig. 15 is a block diagram showing a spatial stabilization apparatus according to the seventh exemplary embodiment. When compared to the spatial stabilization apparatus according to the first exemplary embodiment, the configuration of the spatial stabilization apparatus according to the seventh exemplary embodiment is the same as that of the spatial stabilization apparatus according to the first exemplary embodiment except that the second command generator, the second controller, the first gain, and the second gain are removed. For the same components/structures, the same symbols are assigned and their explanations are omitted.

As shown in Fig. 15, the spatial stabilization apparatus 700 can make the controlled object 1 follow the target angle θt and thereby track (i.e., follow) the target. Further, the spatial stabilization apparatus 700 rotates the controlled object 1 based on a signal indicting the residual trembling angular speed ωr, which is the output of the first subtracter 11. That is, it is possible to put the controlled object 1 in a standstill state in an inertial space and perform spatial stabilization.

Note that each of the spatial stabilization apparatuses according to the above-described first to seventh exemplary embodiments controls a controlled object 1 that is supported so that it can be rotated around one axis. However, a controlled object that is supported so that it can be rotated around each of a plurality of axes can be controlled by independently using a spatial stabilization apparatus according to any of the above-described exemplary embodiments for a respective one of the plurality of axes.

Further, in the spatial stabilization apparatuses according to the above-described first to seventh exemplary embodiments, a PID controller(s) and/or a PI controller(s) are used as the first controller and the second controller. However, the controllers are not limited to the PID controllers and PI controllers. That is, any kind of controllers such as an Hoo-controller may be used.

Further, although the trajectory generator 6 is used in the spatial stabilization apparatuses according to the above-described first to sixth exemplary embodiments, the trajectory generator 6 may be omitted as required.

Further, the sixth exemplary embodiment has a configuration identical to that obtained by adding a phase compensator and a third gain in the spatial stabilization apparatus according to the first exemplary embodiment. However, the phase compensator 17 and the third gain 18 can also be added in the spatial stabilization apparatus according to any of the second to fifth, and seventh exemplary embodiments.

Further, in the spatial stabilization apparatus according to the second exemplary embodiment, the only requirement is that the second subtracter 14 should be connected to the first subtracter 11 through the phase compensator 17 and the third gain 18. That is, there is no restriction on the connection order of the first gain 13, the integrator 12, the phase compensator 17, and the third gain 18.

Further, in the spatial stabilization apparatus according to the third exemplary embodiment, the only requirement is that the second controller 10 should be connected to the first subtracter 11 through the phase compensator 17 and the third gain 18. That is, there is no restriction on the connection order of the second gain 16, the phase compensator 17, and the third gain 18.

Further, similarly to the first exemplary embodiment, the only requirement in the spatial stabilization apparatus according to the fourth exemplary embodiment is that the first subtracter 11 should be connected to the first gain 13 and the second gain 16 through the phase compensator 17 and the third gain 18. That is, there is no restriction on the connection order of the integrator 12, the phase compensator 17, and the third gain 18.

Further, similarly to the first exemplary embodiment, the only requirement in the spatial stabilization apparatus according to the fifth exemplary embodiment is that the third subtracter 19 should be connected to the first gain 13 and the second gain 16 through the phase compensator 17 and the third gain 18. That is, there is no restriction on the connection order of the phase compensator 17 and the third gain 18.

The present invention is not limited to the above-described exemplary embodiments and various changes may be made therein without departing from the spirit and scope of the present invention. For example, the present invention can be easily applied to cases where a controlled object needs to perform both target tracking and spatial stabilization.

Although the present invention is explained above with reference to exemplary embodiments, the present invention is not limited to the above-described exemplary embodiments. Various modifications that can be understood by those skilled in the art can be made to the configuration and details of the present invention within the scope of the invention.

This application is based upon and claims the benefit of priority from Japanese patent applications No. 2013-050330, filed on March 13, 2013, the disclosure of which is incorporated herein in its entirety by reference.

Reference Signs List

| | |
|---|---|
| 100, 200, 300, 400, 500, 600, 700 | SPATIAL STABILIZATION APPARATUS |
| 1 | CONTROLLED OBJECT |
| 2 | ANGLE DETECTOR |
| 3 | MAIN CONTROLLER |
| 4 | DRIVER |
| 5 | FIRST COMMAND GENERATOR |
| 6 | TRAJECTORY GENERATOR |
| 7 | SECOND COMMAND GENERATOR |
| 8 | INERTIA SENSOR |
| 9 | FIRST CONTROLLER |
| 10 | SECOND CONTROLLER |
| 11 | FIRST SUBTRACTER |
| 12 | INTEGRATOR |
| 13 | FIRST GAIN |
| 14 | SECOND SUBTRACTER |
| 15 | ADDER |
| 16 | SECOND GAIN |

**Claims**

1. A spatial stabilization apparatus that is mounted on a vehicle and performs control so that an object to be controlled is stabilized in an inertial space, the spatial stabilization apparatus comprising:

the object to be controlled supported on the vehicle in such a manner that the object to be controlled can be rotated;

angle detection means for detecting an angle of the object to be controlled and outputting the detected angle as a detection angle signal;

first command generation means for outputting a target angle command and a target angular speed command for the object to be controlled;

an inertia sensor that detects an angular speed of the object to be controlled and outputs the detected angular speed as a detection angular speed signal;

first subtraction means for obtaining a difference between the target angular speed command and the detection angular speed signal and outputting the difference as a differential angular speed signal; and

first control means for generating a drive control signal based on the differential angular speed signal and a difference between the target angle command and the detection angle signal, wherein

the spatial stabilization apparatus controls a rotation of the object to be controlled so that an effect on the object to be controlled caused by a movement of the vehicle is reduced.

2. The spatial stabilization apparatus according to Claim 1, further comprising:

second command generation means for outputting a second target angular speed command;

second control means for generating a second control signal for controlling the angular speed or the angle of the object to be controlled based on the second target angular speed command and the differential angular speed signal; and

addition means for adding the drive control signal to the second control signal, wherein

the spatial stabilization apparatus controls the object to be controlled based on an output of the addition means.

3. The spatial stabilization apparatus according to Claim 1 or 2, further comprising a first gain, wherein

the first gain multiplies the differential angular speed signal by a first gain coefficient, and

the first control means generates the drive control signal based on an output of the first gain.

4. The spatial stabilization apparatus according to Claim 2 or 3, further comprising a second gain, wherein

the second gain multiplies the differential angular speed signal by a second gain coefficient, and

the second control means generates the second control signal based on an output of the second gain.

5. The spatial stabilization apparatus according to Claim 4, wherein the first subtraction means is connected with the first and second gains through phase compensation means and a third gain.

6. A spatial stabilization control method for performing control so that an object to be controlled is stabilized in an inertial space, the spatial stabilization control method being mounted on a vehicle, the spatial stabilization control method comprising:

supporting the object to be controlled on the vehicle in such a manner that the object to be controlled can be rotated;

detecting an angle of the object to be controlled and outputting the detected angle as a detection angle signal;

outputting a target angle command and a target angular speed command for the object to be controlled;

detecting, by an inertia sensor, an angular speed of the object to be controlled and outputting the detected angular speed as a detection angular speed signal;

obtaining a difference between the target angular speed command and the detection angular speed signal and outputting the difference as a differential angular speed signal; and

generating a drive control signal based on the differential angular speed signal and a difference between the target angle command and the detection angle signal, wherein

a rotation of the object to be controlled is controlled so that an effect on the object to be controlled caused by a movement of the vehicle is reduced.

7. A spatial stabilization control program, in which a computer is embedded in a spatial stabilization apparatus, the spatial stabilization apparatus comprising: an object to be controlled supported on a vehicle in such a manner that the object to be controlled can be rotated; angle detection means for detecting an angle of the object to be controlled and outputting the detected angle as a detection angle signal; and an inertia sensor that detects an angular speed of the object to be controlled and outputs the detected angular speed as a detection angular speed signal, the spatial stabilization apparatus being configured to control a control apparatus so that the object to be controlled is stabilized in an inertial space,

wherein the computer is made to operate as:

first command generation means for outputting a target angle command and a target angular speed command for the object to be controlled;

first subtraction means for obtaining a difference between the target angular speed command and the detection angular speed signal and outputting the difference as a differential angular speed signal; and

first control means for generating a drive control signal based on the differential angular speed signal and a difference between the target angle command and the detection angle signal, and

wherein a rotation of the object to be controlled is controlled so that an effect on the object to be controlled caused by a movement of the vehicle is reduced.

# Fig. 1

**SPACE STABILIZATION APPARATUS 100**

- 5 FIRST COMMAND GENERATOR
- TARGET ANGLE $\theta t$
- FIRST TARGET ANGULAR SPEED $\omega t1$
- 6 TRAJECTORY GENERATOR
- TARGET ANGLE TRAJECTORY $K\theta$ (4A, 6A, 8A)
- TARGET ANGULAR SPEED TRAJECTORY $K\omega$ (4B, 6B, 8B)
- 7 SECOND COMMAND GENERATOR
- SECOND TARGET ANGULAR SPEED $\omega t2$ (4C, 6C, 8C)

**MAIN CONTROLLER 3**

- 14 SECOND SUBTRACTER (+ / −) (5B, 7B, 9B)
- TARGET COMMAND $K\theta i$
- 9 FIRST CONTROLLER (5C, 7C, 9C)
- ANGLE CONTROL $K\theta c$
- 15 ADDER
- DRIVE CONTROL K
- 4 DRIVER
- 1 CONTROLLED OBJECT
- DETECTED ANGLE $\theta m$ (5D, 9D)
- ANGLE DETECTOR 2
- 10 SECOND CONTROLLER
- ANGULAR SPEED CONTROL $\omega c$ (7D, 9E)
- 13 FIRST GAIN
- 16 SECOND GAIN
- 12 INTEGRATOR (5A, 7A, 9A)
- 11 FIRST SUBTRACTER (+ / −)
- DETECTED ANGULAR SPEED $\omega m$ (4E, 6E, 8E)
- 8 INERTIA SENSOR

EP 2 975 484 A1

Fig. 2

EP 2 975 484 A1

Fig. 3

Fig. 4A

ANGLE

TARGET ANGLE TRAJECTORY Kθ

TARGET ANGLE θt

DETECTED ANGLE θm
(INITIAL VALUE)

0   START TIME        FINISH TIME
    Ts               Tf

TIME

Fig. 4B

ANGULAR SPEED

TARGET ANGULAR SPEED TRAJECTORY Kω

ANGULAR SPEED ω1

0   START TIME        FINISH TIME
    Ts               Tf

TIME

Fig. 4C

ANGULAR SPEED

SECOND TARGET ANGULAR SPEED ωt2

0   START TIME        FINISH TIME
    Ts               Tf

TIME

Fig. 4D

ANGULAR SPEED

TREMBLING DETECTED ANGULAR SPEED ωg

0   START TIME        FINISH TIME
    Ts               Tf

TIME

Fig. 4E

ANGULAR SPEED

DETECTED ANGULAR SPEED ωm

0   START TIME        FINISH TIME
    Ts               Tf

TIME

Fig. 5A

ANGULAR SPEED

OUTPUT OF FIRST
SUBTRACTER 11

0    START TIME
     Ts

FINISH TIME
Tf

TIME

Fig. 5B

ANGULAR SPEED

OUTPUT OF
FIRST GAIN 13

0    START TIME
     Ts

FINISH TIME
Tf

TIME

Fig. 5C

ANGLE

TARGET COMMAND
$K\theta i$

TARGET ANGLE $\theta t$

DETECTED ANGLE $\theta m$
(INITIAL VALUE)

0    START TIME
     Ts

FINISH TIME
Tf

TIME

Fig. 5D

ANGLE

DETECTED ANGLE
$\theta m$

TARGET ANGLE $\theta t$

DETECTED ANGLE $\theta m$
(INITIAL VALUE)

0    START TIME
     Ts

FINISH TIME
Tf

TIME

EP 2 975 484 A1

Fig. 6A

ANGLE

TARGET ANGLE
TRAJECTORY Kθ

DETECTED ANGLE θm
(INITIAL VALUE)

0    START TIME        FINISH TIME
     Ts               Tf                TIME

Fig. 6B

ANGULAR SPEED

TARGET ANGULAR SPEED
TRAJECTORY Kω

0    START TIME        FINISH TIME
     Ts               Tf                TIME

Fig. 6C

ANGULAR SPEED

SECOND TARGET
ANGULAR SPEED ωt2

0    START TIME        FINISH TIME
     Ts               Tf                TIME

Fig. 6D

ANGULAR SPEED

TREMBLING DETECTED
ANGULAR SPEED ωg

0                                      TIME

Fig. 6E

ANGULAR SPEED

DETECTED ANGULAR SPEED ωm1

DETECTED ANGULAR
SPEED ωm2

0                                      TIME

22

EP 2 975 484 A1

Fig. 7A

ANGULAR SPEED

OUTPUT OF FIRST SUBTRACTER 11
(RESIDUAL TREMBLING ANGULAR SPEED $\omega r1$)

OUTPUT OF FIRST SUBTRACTER 11
(RESIDUAL TREMBLING ANGULAR SPEED $\omega r2$)

TIME

0

START TIME
Ts

FINISH TIME
Tf

Fig. 7B

ANGLE

OUTPUT OF FIRST GAIN 13
(BEFORE PREDETERMINED TIME HAS ELAPSED)

OUTPUT OF FIRST GAIN 13
(AFTER PREDETERMINED TIME HAS ELAPSED)

TIME

0

START TIME
Ts

FINISH TIME
Tf

Fig. 7C

ANGLE

TARGET COMMAND $K\theta i$
(BEFORE PREDETERMINED TIME HAS ELAPSED)

TARGET COMMAND $K\theta i$
(AFTER PREDETERMINED TIME HAS ELAPSED)

TIME

0

START TIME
Ts

FINISH TIME
Tf

Fig. 7D

ANGULAR SPEED

ANGULAR SPEED CONTROL SIGNAL $K\omega c$

TIME

0

START TIME
Ts

FINISH TIME
Tf

Fig. 8A

Fig. 8B

Fig. 8C

Fig. 8D

Fig. 8E

Fig. 9A

OUTPUT OF FIRST SUBTRACTER 11
(RESIDUAL TREMBLING ANGULAR SPEED $\omega$r1)

OUTPUT OF FIRST SUBTRACTER 11
(RESIDUAL TREMBLING
ANGULAR SPEED $\omega$r2)

ANGULAR SPEED

TIME

0 START TIME
Ts

FINISH TIME
Tf

Fig. 9B

OUTPUT OF FIRST GAIN 13
(BEFORE PREDETERMINED TIME HAS ELAPSED)

OUTPUT OF FIRST GAIN 13
(AFTER PREDETERMINED TIME
HAS ELAPSED)

ANGLE

TIME

0 START TIME
Ts

FINISH TIME
Tf

Fig. 9C

TARGET COMMAND K$\theta$i
(BEFORE PREDETERMINED TIME HAS ELAPSED)

TARGET COMMAND K$\theta$i
(AFTER PREDETERMINED TIME
HAS ELAPSED)

ANGLE

TIME

0 START TIME
Ts

FINISH TIME
Tf

Fig. 9D

DETECTED ANGLE
$\theta$m

ANGLE

TIME

0 START TIME
Ts

FINISH TIME
Tf

Fig. 9E

ANGULAR SPEED CONTROL SIGNAL K$\omega$c

ANGULAR SPEED

TIME

0 START TIME
Ts

FINISH TIME
Tf

# Fig. 10

SPACE STABILIZATION APPARATUS  200

MAIN CONTROLLER

TARGET ANGLE θt

TARGET ANGLE TRAJECTORY Kθ

TARGET COMMAND Kθi

DRIVE CONTROL K

FIRST COMMAND GENERATOR

FIRST TARGET ANGULAR SPEED ωt1

TRAJECTORY GENERATOR

TARGET ANGULAR SPEED TRAJECTORY Kω

SECOND SUBTRACTER

FIRST CONTROLLER

DRIVER

CONTROLLED OBJECT

DETECTED ANGLE θm

ANGLE DETECTOR

FIRST GAIN

INTEGRATOR

FIRST SUBTRACTER

DETECTED ANGULAR SPEED ωm

INERTIA SENSOR

EP 2 975 484 A1

Fig. 11

EP 2 975 484 A1

# Fig. 12

SPACE STABILIZATION APPARATUS 400

MAIN CONTROLLER

FIRST COMMAND GENERATOR (5)

TARGET ANGLE θt

FIRST TARGET ANGULAR SPEED ωt1

SECOND COMMAND GENERATOR (7)

SECOND TARGET ANGLE θt2

TRAJECTORY GENERATOR (6)

TARGET ANGLE TRAJECTORY Kθ

TARGET ANGULAR SPEED TRAJECTORY Kω

SECOND SUBTRACTER (14)

TARGET COMMAND Kθi

FIRST CONTROLLER (9)

ANGLE CONTROL Kθc

ADDER (15)

DRIVER (4)

DRIVE CONTROL K

CONTROLLED OBJECT (1)

ANGLE DETECTOR (2)

DETECTED ANGLE θm

SECOND CONTROLLER (10)

ANGLE CONTROL Kθc

FIRST GAIN (13)

SECOND GAIN (16)

INTEGRATOR (12)

FIRST SUBTRACTER (11)

DETECTED ANGULAR SPEED ωm

INERTIA SENSOR (8)

EP 2 975 484 A1

Fig. 13

SPACE STABILIZATION APPARATUS 500

MAIN CONTROLLER 3

CONTROLLED OBJECT 1

ANGLE DETECTOR 2

INERTIA SENSOR 8

DRIVER 4

DRIVE CONTROL K

DETECTED ANGLE θm

DETECTED ANGULAR SPEED ωm

ADDER 15

FIRST CONTROLLER 9

ANGLE CONTROL Kθc

SECOND SUBTRACTER 14

TARGET COMMAND Kθi

SECOND CONTROLLER 10

ANGLE CONTROL Kθc

INTEGRATOR 12

THIRD SUBTRACTER 19

SECOND GAIN 16

FIRST GAIN 13

TRAJECTORY GENERATOR 6

TARGET ANGLE TRAJECTORY Kθ

TARGET ANGLE θt

FIRST TARGET ANGULAR SPEED ωt1

SECOND TARGET ANGLE θt2

FIRST COMMAND GENERATOR 5

SECOND COMMAND GENERATOR 7

29

Fig. 14

SPACE STABILIZATION APPARATUS 600

# Fig. 15

SPACE STABILIZATION APPARATUS 700

MAIN CONTROLLER 3

FIRST COMMAND GENERATOR 5

TARGET ANGLE $\theta t$

FIRST TARGET ANGULAR SPEED $\omega t1$

TARGET COMMAND $K\theta i$

ANGLE CONTROL $K\theta c$ 9

FIRST CONTROLLER

ADDER

DRIVE CONTROL K 4

DRIVER

CONTROLLED OBJECT 1

DETECTED ANGLE $\theta m$

ANGULAR SPEED CONTROL $\omega c$

DETECTED ANGLE $\theta m$

ANGLE DETECTOR 2

FIRST SUBTRACTER 11

DETECTED ANGULAR SPEED $\omega m$

INERTIA SENSOR 8

EP 2 975 484 A1

Fig. 16

Fig. 17

EP 2 975 484 A1

## INTERNATIONAL SEARCH REPORT

| International application No. |
| --- |
| PCT/JP2013/007222 |

| A. CLASSIFICATION OF SUBJECT MATTER |
| --- |
| *G05D3/12*(2006.01)i, *G01C19/00*(2013.01)i |

According to International Patent Classification (IPC) or to both national classification and IPC

| B. FIELDS SEARCHED |
| --- |
| Minimum documentation searched (classification system followed by classification symbols) |
| G05D3/12, G01C19/00 |

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| X<br>A | JP 11-234961 A (Fujitsu Ltd.),<br>27 August 1999 (27.08.1999),<br>paragraphs [0006], [0034] to [0039], [0060] to [0068], [0098]; fig. 2, 13<br>(Family: none) | 1,3-4,6-7<br>2,5 |
| A | JP 2001-290540 A (Mitsubishi Electric Corp.),<br>19 October 2001 (19.10.2001),<br>entire text; all drawings<br>(Family: none) | 1-7 |
| A | JP 2008-217129 A (Toshiba Corp.),<br>18 September 2008 (18.09.2008),<br>entire text; all drawings<br>(Family: none) | 1-7 |

☒ Further documents are listed in the continuation of Box C.   ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 February, 2014 (18.02.14) | 04 March, 2014 (04.03.14) |

| Name and mailing address of the ISA/<br>Japanese Patent Office | Authorized officer |
| --- | --- |
| Facsimile No. | Telephone No. |

Form PCT/ISA/210 (second sheet) (July 2009)

**INTERNATIONAL SEARCH REPORT**

| International application No. |
| --- |
| PCT/JP2013/007222 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2008-293091 A (Tamagawa Seiki Co., Ltd.), 04 December 2008 (04.12.2008), entire text; all drawings (Family: none) | 1-7 |
| A | JP 5-26674 A (Mitsubishi Electric Corp.), 02 February 1993 (02.02.1993), entire text; all drawings (Family: none) | 1-7 |
| A | JP 2000-134532 A (Mitsubishi Electric Corp.), 12 May 2000 (12.05.2000), entire text; all drawings (Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05079299 B
- JP 2013050330 A